# EUROPEAN PATENT APPLICATION

(11) **EP 4 164 314 A1**
(43) Date of publication of application: **12.04.2023**
(21) Application number: 21832076.0
(22) Date of filing: 28.06.2021
(51) Int. Cl.: H04W 72/04

(54) **TIME DOMAIN RESOURCE ALLOCATION METHOD AND RELATED PRODUCT**

(30) Priority: 28.06.2020 CN 202010602225
(71) Applicant: Huawei Technologies Co., Ltd., Longgang District, Shenzhen, Guangdong 518129 (CN)
(72) Inventor: CHEN, Baojun, Shenzhen, Guangdong 518129 (CN); WU, Xiaofang, Shenzhen, Guangdong 518129 (CN)
(74) Representative: Körber, Martin Hans
(86) International application number: PCT/CN2021/102832
(87) International publication number: WO 2022/001979

(57) **Abstract**

Embodiments of this application disclose a time domain resource allocation method and a related product. The method is applied to a network device. The method includes: obtaining a first time domain resource allocation mode at a current moment; switching from the first time domain resource allocation mode to a second time domain resource allocation mode when a preset switching condition corresponding to switching from the first time domain resource allocation mode to the second time domain resource allocation mode is met; and allocating a time domain resource to a terminal device in the second time domain resource allocation mode. Embodiments of this application help improve uplink and downlink communication efficiency.

## Description

This application claims priority to Chinese Patent Application No. 202010602225.X, filed with the China National Intellectual Property Administration on June 28, 2020 and entitled "TIME DOMAIN RESOURCE ALLOCATION METHOD AND RELATED PRODUCT", which is incorporated herein by reference in its entirety.

### TECHNICAL FIELD

The present invention relates to the field of communications technologies, and in particular, to a time domain resource allocation method and a related product.

### BACKGROUND

A fifth generation mobile communication system uses a new radio (New Radio, NR) standard developed by 3GPP. 5G NR defines two frequency ranges: an FR 1 and an FR 2. The FR 1 includes a frequency band below 6 GHz, and the FR 2 includes a millimeter wave frequency band ranging from 20 GHz to 60 GHz. 5G NR defines two transmission standards: time division duplex (Time Division Duplex, TDD) and frequency division duplex (Frequency Division Duplexing, FDD). In a time division scheduling process in an NR TDD system, a minimum scheduling unit is one slot (slot), and each slot includes several orthogonal frequency division multiplexing (Orthogonal Frequency Division Multiplexing, OFDM) symbols. Slots are mainly classified into a downlink (DownLink, DL) slot, an uplink (UpLink, UL) slot, and a mixed (mixing) slot. The mixed slot is also referred to as a special (Special) slot, namely, an S slot. The DL slot includes only DL symbols, the UL slot includes only UL symbols, and the S slot includes a DL symbol, a gap symbol, and a UL symbol.

For universality of a system, due to constraints such as a protocol and a resource, a UL symbol for an information feedback is allocated, in a UL slot or an S slot, to each slot including a physical downlink shared channel (Physical Downlink Shared Channel, PDSCH) symbol (that is, each DL slot and each S slot), to provide feedbacks for downlink transmission processes of each DL slot and each S slot. For example, one physical uplink control channel (Physical Uplink Control Channel, PUCCH) symbol is allocated, in the UL slot, to each DL slot and each S slot, to provide a hybrid automatic repeat request (Hybrid Automatic Repeat Request, HARQ) feedback for downlink transmission in the DL slot and the S slot. For another example, a sounding reference signal (Sounding Reference Signal, SRS) symbol may be further allocated in the UL slot, so that a terminal device may send an SRS.

However, this UL symbol allocation mode is generally related to a DL slot or an S slot, and the allocation mode is fixed. As a result, allocated UL symbols may be excessive or insufficient, and uplink and downlink transmission efficiency is reduced.

### SUMMARY

This application provides a time domain resource allocation method and a related product. A time domain resource allocation mode is switched, so that a time domain resource is specifically allocated to a terminal device, to improve uplink and downlink transmission efficiency.

According to a first aspect, an embodiment of this application provides a time domain resource allocation method. The method may be performed by a network device or a chip used in the network device. The following provides descriptions by using an example in which the method is performed by the network device. The method includes:
obtaining a first time domain resource allocation mode at a current moment;
switching from the first time domain resource allocation mode to a second time domain resource allocation mode when a preset switching condition corresponding to switching from the first time domain resource allocation mode to the second time domain resource allocation mode is met; and
allocating a time domain resource to a terminal device in the second time domain resource allocation mode.

A quantity of time domain resources (PUCCH resources) allocated to the terminal device in the second time domain resource allocation mode is different from that in the first time domain resource allocation mode, and one of the second time domain resource allocation mode and the first time domain resource allocation mode may allocate a relatively large quantity of time domain resources to the terminal device, and the other time domain resource allocation mode may allocate a relatively small quantity of time domain resources to the terminal device.

It can be learned that, in this embodiment of this application, the network device may allocate a PUCCH resource to the terminal device in different time domain resource allocation modes. To be specific, when the terminal device has a relatively large requirement for PUCCH resources, one time domain resource allocation mode is used for allocating resources to meet the requirement of the terminal device, and when the terminal device has a relatively small requirement for PUCCH resources, another time domain resource allocation mode may be used for allocating time domain resources to the terminal device. Therefore, the network device may respectively perform time domain resource allocation based on different requirements of the terminal device, so that time domain resource allocation is flexible, and PUCCH resources are not excessive or insufficient. This improves an uplink throughput and a downlink throughput, and improves uplink and downlink data transmission efficiency.

In some possible implementations, the time domain resource includes a physical uplink control channel resource and/or a sounding reference signal resource.

It can be learned that, in this implementation, a time domain resource allocation mode is dynamically switched, so that time domain resource allocation is flexible, and an uplink control channel resource and/or a sounding reference signal resource corresponding to a requirement may be allocated to the terminal device. Therefore, the uplink control channel resource and/or the sounding reference signal resource are/is not excessive or insufficient, and more uplink and downlink resources are reserved for the terminal device as much as possible. This improves uplink and downlink communication efficiency.

In some possible implementations, the first time domain resource allocation mode is a first allocation mode or a second allocation mode.

The second time domain resource allocation mode is the first allocation mode or the second allocation mode.

The first time domain resource allocation mode and the second time domain resource allocation mode are different time domain resource allocation modes.

More uplink control channel resources are allocated in the second allocation mode than in the first allocation mode.

In some possible implementations, the first allocation mode includes allocating one or more first symbols and one or more second symbols in a mixed slot, where each first symbol is for a hybrid automatic repeat request feedback, and each second symbol is for a scheduling request, a beam management feedback, a sounding reference signal, or a hybrid automatic repeat request feedback.

The second allocation mode includes allocating a plurality of third symbols in an uplink slot, and allocating a fourth symbol and a fifth symbol in a mixed slot, where each third symbol is for a hybrid automatic repeat request feedback, a quantity of third symbols is greater than a quantity of first symbols, the fourth symbol is for a scheduling request and/or a beam management feedback, and the fifth symbol is for a sounding reference signal.

It can be learned that, in this implementation, the first allocation mode and the second allocation mode are set, and more uplink control channel resources are allocated in the second allocation mode than in the first allocation mode. In this case, when the terminal device has a relatively large requirement for uplink control channel resources, a time domain resource may be allocated to the terminal device in the second allocation mode, to ensure that a corresponding uplink control channel resource can be allocated to each terminal device. Therefore, a downlink transmission failure does not occur, and a downlink throughput and downlink transmission efficiency are improved. When the terminal device has a relatively small requirement for uplink control channel resources, a time domain resource is allocated to the terminal device in the first allocation mode, that is, a relatively small quantity of uplink control channel resources are allocated, so that more uplink resources can be reserved in a UL slot, and an uplink throughput and uplink transmission efficiency are improved.

In some possible implementations, when the second time domain resource allocation mode is the first allocation mode, the preset switching condition includes at least one of the following:
a quantity of terminal devices accessing the network device is less than a preset terminal quantity N₁;
a quantity of beams used by a terminal device that accesses the network device is less than a preset beam quantity M₁;
a downlink physical resource block utilization is less than a preset utilization R₁;
a downlink data buffer size is less than a preset buffer size L₁;
a ratio of an uplink physical resource block utilization to the downlink physical resource block utilization is greater than a preset ratio K₁; and
a quantity of terminal devices whose downlink data buffer sizes are greater than a preset buffer size L₂ is less than a preset terminal quantity N₂; and
when the second time domain resource allocation mode is the second allocation mode, the preset switching condition includes at least one of the following:
   a quantity of terminal devices accessing the network device is greater than a preset terminal quantity N₃;
   a quantity of beams used by a terminal device that accesses the network device is greater than a preset beam quantity M₂;
   a downlink physical resource block utilization is greater than a preset utilization R₂;
   a downlink data buffer size is greater than a preset buffer size L₃;
   a ratio of an uplink physical resource block utilization to the downlink physical resource block utilization is less than a preset ratio K₂; and
   a quantity of terminal devices whose downlink data buffer sizes are greater than the preset buffer size L₂ is greater than a preset terminal quantity N₄, where
   N₁≤N₃, M1≤M₂, R₁≤R₂, L₁≤L₃, K₁≤K₂, and N₂≤N₄.

It can be learned that, in this implementation, a plurality of switching conditions for the time domain resource allocation mode are set. In this way, when only one condition is met, the network device switches to an adapted time domain resource allocation mode for allocation to the terminal device. Therefore, a matched time domain resource can be allocated to the terminal device in various working scenarios, and application scenarios of the time domain resource allocation mode in this application are increased.

In some possible implementations, the second allocation mode includes a plurality of second allocation sub-modes.

The first time domain resource allocation mode is the first allocation mode or any one of the plurality of second allocation sub-modes.

The second time domain resource allocation mode is the first allocation mode or any one of the plurality of second allocation sub-modes.

Quantities of uplink control channel resources allocated in any two of the plurality of second allocation sub-modes are different, and a quantity of uplink control channel resources allocated in any second allocation sub-mode is greater than that in the first allocation mode.

In any second allocation sub-mode in the second time domain resource allocation mode, the allocating a time domain resource to a terminal device in the second time domain resource allocation mode includes:
allocating the time domain resource to the terminal device in the second allocation sub-mode.

It can be learned that, in this implementation, the second allocation mode is divided into a plurality of second allocation sub-modes at a fine granularity. In this way, when the terminal device has a large requirement for uplink control channel resources, a more precise allocation mode may be used to allocate a more precise time domain resource to the terminal device. For example, if the network device determines that three HARQ resources need to be allocated in one UL slot, the network device may allocate a time domain resource to the terminal device in a second allocation sub-mode corresponding to the allocation mode. In this way, the allocated time domain resource better matches a requirement of the terminal device, and uplink and downlink communication efficiency can be improved as much as possible when the requirement of the terminal device for the time domain resource is met.

In some possible implementations, any one of the plurality of second allocation sub-modes includes:
allocating, in the uplink slot, a plurality of sixth symbols corresponding to the second allocation sub-mode, and allocating, in the mixed slot, a seventh symbol and an eighth symbol that correspond to the second allocation sub-mode, where
each sixth symbol is for the hybrid automatic repeat request feedback, and a quantity of sixth symbols is greater than the quantity of first symbols but less than or equal to the quantity of third symbols;
the seventh symbol is for the scheduling request and/or the beam management feedback; and
the eighth symbol is for the sounding reference signal.

In some possible implementations, the plurality of second allocation sub-modes include a second allocation sub-mode A, a second allocation sub-mode B, and a second allocation sub-mode C, where quantities of uplink control channel resources allocated in the second allocation sub-mode A, the second allocation sub-mode B, and the second allocation sub-mode C increase sequentially.

In some possible implementations, when the first time domain resource allocation mode is the second allocation sub-mode A, and the second time domain resource allocation mode is the first allocation mode, the preset switching condition includes at least one of the following:
a quantity of terminal devices accessing the network device is greater than a preset terminal quantity N_{1A} but less than a preset terminal quantity N_{2A};
a quantity of beams used by a terminal device that accesses the network device is greater than a preset beam quantity M_{1A} but less than a preset beam quantity M_{2A};
a downlink physical resource block utilization is greater than a preset utilization R_{1A} but less than a preset utilization R_{2A};
a downlink data buffer size is greater than a preset buffer size L_{1A} but less than a preset buffer size L_{2A};
a ratio of an uplink physical resource block utilization to the downlink physical resource block utilization is less than a preset ratio K_{1A} but greater than a preset ratio K_{2A}; and
a quantity of terminal devices whose downlink data buffer sizes are greater than the preset buffer size L₂ is greater than a preset terminal quantity N_{3A} but less than a preset terminal quantity N_{4A}.

In some possible implementations, when the first time domain resource allocation mode is the second allocation sub-mode B, and the second time domain resource allocation mode is the first allocation mode, the preset switching condition includes at least one of the following:
a quantity of terminal devices accessing the network device is greater than a preset terminal quantity N_{1B} but less than a preset terminal quantity N_{2B};
a quantity of beams used by a terminal device that accesses the network device is greater than a preset beam quantity M_{1B} but less than a preset beam quantity M_{2B};
a downlink physical resource block utilization is greater than a preset utilization R_{1B} but less than a preset utilization R_{2B};
a downlink data buffer size is greater than a preset buffer size L_{1B} but less than a preset buffer size L_{2B};
a ratio of an uplink physical resource block utilization to the downlink physical resource block utilization is less than a preset ratio K_{1B} but greater than a preset ratio K_{2B}; and
a quantity of terminal devices whose downlink data buffer sizes are greater than the preset buffer size L₂ is greater than a preset terminal quantity N_{3B} but less than a preset terminal quantity N_{4B}.

In some possible implementations, when the first time domain resource allocation mode is the second allocation sub-mode C, and the second time domain resource allocation mode is the first allocation mode, the preset switching condition includes at least one of the following:
a quantity of terminal devices accessing the network device is greater than a preset terminal quantity N_{1C};
a quantity of beams used by a terminal device that accesses the network device is greater than a preset beam quantity M_{1C};
a downlink physical resource block utilization is greater than a preset utilization R_{1C};
a downlink data buffer size is greater than a preset buffer size L_{1C};
a ratio of an uplink physical resource block utilization to the downlink physical resource block utilization is less than a preset ratio K_{1C}; and
a quantity of terminal devices whose downlink data buffer sizes are greater than the preset buffer size L₂ is greater than a preset terminal quantity N_{2C}.
N_{1C}≥N_{2B}, N_{1B}≥N_{2A}, M_{1C}≥M_{2B}, M_{1B}≥M_{2A}, R_{1C}≥R_{2B}, R_{1B}≥R_{2A}, L_{1C}≥L_{2B}, L_{1B}≥L_{2A}, K_{1C}≤K_{2B}, K_{1B}≤K_{2A}, N_{2C}≥N_{4B}, and N_{3B}≥N_{4A}.

In some possible implementations, when the first time domain resource allocation mode is any one of the second allocation sub-mode A, the second allocation sub-mode B, and the second allocation sub-mode C, and the first time domain resource allocation mode is the first allocation mode, the preset switching condition includes at least one of the following:
a quantity of terminal devices accessing the network device is less than a preset terminal quantity N₅;
a quantity of beams used by a terminal device that accesses the network device is less than a preset beam quantity M₃;
a downlink physical resource block utilization is less than a preset utilization R₃;
a downlink data buffer size is less than a preset buffer size L₄;
a ratio of an uplink physical resource block utilization to the downlink physical resource block utilization is greater than a preset ratio K₃; and
a quantity of terminal devices whose downlink data buffer sizes are greater than the preset buffer size L₂ is less than a preset terminal quantity N₆.

In some possible implementations, a scheduling request resource, a beam management resource, and a hybrid automatic repeat request resource are separately reconfigured to time domain locations of corresponding symbols based on the second time domain resource allocation mode.

A sounding reference signal resource is reconfigured to a time domain location of a corresponding symbol based on the second time domain resource allocation mode, or a time domain location corresponding to a sounding reference signal resource is limited based on the second time domain resource allocation mode.

It can be learned that, in this implementation, a process of reallocating the sounding reference signal resource may be completed in a limitation mode, to reduce switching complexity and load of the network device.

According to a second aspect, an embodiment of this application provides a network device. For beneficial effects, refer to descriptions of the first aspect. Details are not described herein again. The network device has a function of implementing a behavior in the method embodiment in the first aspect. The function may be implemented by hardware, or may be implemented by hardware executing corresponding software. The hardware or the software includes one or more modules corresponding to the foregoing function. In some possible implementations, the network device includes:
a processing unit, configured to obtain a first time domain resource allocation mode at a current moment, where
the processing unit is further configured to switch from the first time domain resource allocation mode to a second time domain resource allocation mode when a preset switching condition corresponding to switching from the first time domain resource allocation mode to the second time domain resource allocation mode is met; and
the processing unit is further configured to allocate a time domain resource to a terminal device in the second time domain resource allocation mode.

In some possible implementations, the time domain resource includes a physical uplink control channel resource and/or a sounding reference signal resource.

In some possible implementations, the first time domain resource allocation mode is a first allocation mode or a second allocation mode.

The second time domain resource allocation mode is the first allocation mode or the second allocation mode.

The first time domain resource allocation mode and the second time domain resource allocation mode are different time domain resource allocation modes.

More uplink control channel resources are allocated in the second allocation mode than in the first allocation mode.

In some possible implementations, the first allocation mode includes allocating one or more first symbols and one or more second symbols in a mixed slot, where each first symbol is for a hybrid automatic repeat request feedback, and each second symbol is for a scheduling request, a beam management feedback, a sounding reference signal, or a hybrid automatic repeat request feedback.

The second allocation mode includes allocating a plurality of third symbols in an uplink slot, and allocating a fourth symbol and a fifth symbol in a mixed slot, where each third symbol is for a hybrid automatic repeat request feedback, a quantity of third symbols is greater than a quantity of first symbols, the fourth symbol is for a scheduling request and/or a beam management feedback, and the fifth symbol is for a sounding reference signal.

In some possible implementations, when the second time domain resource allocation mode is the first allocation mode, the preset switching condition includes at least one of the following:
a quantity of terminal devices accessing the network device is less than a preset terminal quantity N₁;
a quantity of beams used by a terminal device that accesses the network device is less than a preset beam quantity M₁;
a downlink physical resource block utilization is less than a preset utilization R₁;
a downlink data buffer size is less than a preset buffer size L₁;
a ratio of an uplink physical resource block utilization to the downlink physical resource block utilization is greater than a preset ratio K₁; and
a quantity of terminal devices whose downlink data buffer sizes are greater than a preset buffer size L₂ is less than a preset terminal quantity N₂; and
when the second time domain resource allocation mode is the second allocation mode, the preset switching condition includes at least one of the following:
   a quantity of terminal devices accessing the network device is greater than a preset terminal quantity N₃;
   a quantity of beams used by a terminal device that accesses the network device is greater than a preset beam quantity M₂;
   a downlink physical resource block utilization is greater than a preset utilization R₂;
   a downlink data buffer size is greater than a preset buffer size L₃;
   a ratio of an uplink physical resource block utilization to the downlink physical resource block utilization is less than a preset ratio K₂; and
   a quantity of terminal devices whose downlink data buffer sizes are greater than the preset buffer size L₂ is greater than a preset terminal quantity N₄, where
   N₁≤N₃, M1≤M₂, R₁≤R₂, L₁≤L₃, K₁≤K₂, and N₂≤N₄.

In some possible implementations, the second allocation mode includes a plurality of second allocation sub-modes.

The first time domain resource allocation mode is the first allocation mode or any one of the plurality of second allocation sub-modes.

The second time domain resource allocation mode is the first allocation mode or any one of the plurality of second allocation sub-modes.

Quantities of uplink control channel resources allocated in any two of the plurality of second allocation sub-modes are different, and a quantity of uplink control channel resources allocated in any second allocation sub-mode is greater than that in the first allocation mode.

In any second allocation sub-mode in the second time domain resource allocation mode, for allocating a time domain resource to a terminal device in the second time domain resource allocation mode, the processing unit is specifically configured to:
allocate the time domain resource to the terminal device in the second allocation sub-mode.

In some possible implementations, any one of the plurality of second allocation sub-modes includes:
allocating, in the uplink slot, a plurality of sixth symbols corresponding to the second allocation sub-mode, and allocating, in the mixed slot, a seventh symbol and an eighth symbol that correspond to the second allocation sub-mode, where
each sixth symbol is for the hybrid automatic repeat request feedback, and a quantity of sixth symbols is greater than the quantity of first symbols but less than or equal to the quantity of third symbols;
the seventh symbol is for the scheduling request and/or the beam management feedback; and
the eighth symbol is for the sounding reference signal.

In some possible implementations, the plurality of second allocation sub-modes include a second allocation sub-mode A, a second allocation sub-mode B, and a second allocation sub-mode C, where quantities of uplink control channel resources allocated in the second allocation sub-mode A, the second allocation sub-mode B, and the second allocation sub-mode C increase sequentially.

In some possible implementations, when the first time domain resource allocation mode is the second allocation sub-mode A, and the second time domain resource allocation mode is the first allocation mode, the preset switching condition includes at least one of the following:
a quantity of terminal devices accessing the network device is greater than a preset terminal quantity N_{1A} but less than a preset terminal quantity N_{2A};
a quantity of beams used by a terminal device that accesses the network device is greater than a preset beam quantity M_{1A} but less than a preset beam quantity M_{2A};
a downlink physical resource block utilization is greater than a preset utilization R_{1A} but less than a preset utilization R_{2A};
a downlink data buffer size is greater than a preset buffer size L_{1A} but less than a preset buffer size L_{2A};
a ratio of an uplink physical resource block utilization to the downlink physical resource block utilization is less than a preset ratio K_{1A} but greater than a preset ratio K_{2A}; and
a quantity of terminal devices whose downlink data buffer sizes are greater than the preset buffer size L₂ is greater than a preset terminal quantity N_{3A} but less than a preset terminal quantity N_{4A}.

In some possible implementations, when the first time domain resource allocation mode is the second allocation sub-mode B, and the second time domain resource allocation mode is the first allocation mode, the preset switching condition includes at least one of the following:
a quantity of terminal devices accessing the network device is greater than a preset terminal quantity N_{1B} but less than a preset terminal quantity N_{2B};
a quantity of beams used by a terminal device that accesses the network device is greater than a preset beam quantity M_{1B} but less than a preset beam quantity M_{2B};
a downlink physical resource block utilization is greater than a preset utilization R_{1B} but less than a preset utilization R_{2B};
a downlink data buffer size is greater than a preset buffer size L_{1B} but less than a preset buffer size L_{2B};
a ratio of an uplink physical resource block utilization to the downlink physical resource block utilization is less than a preset ratio K_{1B} but greater than a preset ratio K_{2B}; and
a quantity of terminal devices whose downlink data buffer sizes are greater than the preset buffer size L₂ is greater than a preset terminal quantity N_{3B} but less than a preset terminal quantity N_{4B}.

In some possible implementations, when the first time domain resource allocation mode is the second allocation sub-mode C, and the second time domain resource allocation mode is the first allocation mode, the preset switching condition includes at least one of the following:
a quantity of terminal devices accessing the network device is greater than a preset terminal quantity N_{1C};
a quantity of beams used by a terminal device that accesses the network device is greater than a preset beam quantity M_{1C};
a downlink physical resource block utilization is greater than a preset utilization R_{1C};
a downlink data buffer size is greater than a preset buffer size L_{1C};
a ratio of an uplink physical resource block utilization to the downlink physical resource block utilization is less than a preset ratio K_{1C}; and
a quantity of terminal devices whose downlink data buffer sizes are greater than the preset buffer size L₂ is greater than a preset terminal quantity N_{2C}.
N_{1C}≥N_{2B}, N_{1B}≥N_{2A}, M_{1C}≥M_{2B}, M_{1B}≥M_{ZA}, R_{1C}≥R_{2B}, R_{1B}≥R_{2A}, L_{1C}≥L_{2B}, L_{1B}≥L_{2A}, K_{1C}≤K_{2B}, K_{1B}≤K_{2A}, N_{2C}≥N_{4B}, and N_{3B}≥N_{4A}.

In some possible implementations, when the first time domain resource allocation mode is any one of the second allocation sub-mode A, the second allocation sub-mode B, and the second allocation sub-mode C, and the first time domain resource allocation mode is the first allocation mode, the preset switching condition includes at least one of the following:
a quantity of terminal devices accessing the network device is less than a preset terminal quantity N₅;
a quantity of beams used by a terminal device that accesses the network device is less than a preset beam quantity M₃;
a downlink physical resource block utilization is less than a preset utilization R₃;
a downlink data buffer size is less than a preset buffer size L₄;
a ratio of an uplink physical resource block utilization to the downlink physical resource block utilization is greater than a preset ratio K₃; and
a quantity of terminal devices whose downlink data buffer sizes are greater than the preset buffer size L₂ is less than a preset terminal quantity N₆.

In some possible implementations, for switching from the first time domain resource allocation mode to the second time domain resource allocation mode, the processing unit is specifically configured to:
separately reconfigure, based on the second time domain resource allocation mode, a scheduling request resource, a beam management resource, and a hybrid automatic repeat request resource to time domain locations of corresponding symbols; and
reconfigure, based on the second time domain resource allocation mode, a sounding reference signal resource to a time domain location of a corresponding symbol, or limit, based on the second time domain resource allocation mode, a time domain location corresponding to a sounding reference signal resource.

According to a third aspect, an embodiment of this application provides a network device, including a processor. The processor is connected to a memory. The memory is configured to store a computer program. The processor is configured to execute the computer program stored in the memory, to enable the apparatus to perform the method according to any implementation of the first aspect.

According to a fourth aspect, an embodiment of this application provides a computer-readable storage medium. The computer-readable storage medium stores a computer program. When the computer program is run, the method according to any implementation of the first aspect is implemented.

According to a fifth aspect, an embodiment of this application provides a computer program product. The computer program product includes computer program code. When the computer program code is run, the methods performed by the network device in the foregoing aspects are performed.

According to a sixth aspect, an embodiment of this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

### BRIEF DESCRIPTION OF DRAWINGS

FIG. 1 is a schematic diagram of slot division in a radio frame according to an embodiment of this application;
FIG. 2 is a schematic diagram of a correspondence between a PUCCH symbol and a downlink slot according to an embodiment of this application;
FIG. 3 is a diagram of an architecture of a time domain resource allocation system according to an embodiment of this application;
FIG. 4 is a schematic flowchart of a time domain resource allocation method according to an embodiment of this application;
FIG. 5 is a schematic diagram of switching a time domain resource allocation mode according to an embodiment of this application;
FIG. 6 is a schematic diagram of a first allocation mode according to an embodiment of this application;
FIG. 7 is a schematic diagram of allocating an other resource according to an embodiment of this application;
FIG. 8 is a schematic diagram of a second allocation mode according to an embodiment of this application;
FIG. 9 is a schematic diagram of a second allocation sub-mode A according to an embodiment of this application;
FIG. 10 is a schematic diagram of a second allocation sub-mode B according to an embodiment of this application;
FIG. 11 is a schematic diagram of another switching a time domain resource allocation mode according to an embodiment of this application;
FIG. 12 is a schematic diagram of a structure of a network device according to an embodiment of this application;
FIG. 13 is a schematic diagram of a structure of another network device according to an embodiment of this application; and
FIG. 14 is a schematic diagram of a structure of a chip according to an embodiment of this application.

### DESCRIPTION OF EMBODIMENTS

The technical solutions in embodiments of this application may be applied to a 5th generation (the 5th generation, 5G) new radio (New radio, NR) architecture or an evolved architecture corresponding to 5G.

A terminal device in embodiments of this application may be, for example, user equipment (User Equipment, UE). The UE may be a device that provides a user with voice and/or data connectivity, for example, may include a handheld device with a wireless connection function, or a processing device connected to a wireless modem. The UE may communicate with a core network via a radio access network (radio access network, RAN), and exchange voice and/or data with the RAN. The UE may include wireless user equipment, mobile user equipment, device-to-device (device-to-device, D2D) communication user equipment, vehicle-to-everything (vehicle-to-everything, V2X) user equipment, machine-to-machine/machine-type communication (machine-to-machine /machine-type communications, M2M/MTC) user equipment, internet of things (internet of things, IoT) user equipment, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the UE may include a mobile phone (or referred to as a "cellular" phone), a computer having mobile user equipment, a portable, pocket-sized, handheld, or computer-built-in mobile apparatus, or the like. For example, the UE may be a device, for example, a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The UE may alternatively include a limited device, for example, a device with low power consumption, a device with a limited storage capability, or a device with a limited computing capability. The UE includes an information sensing device, for example, a barcode, radio frequency identification (radio frequency identification, RFID), a sensor, a global positioning system (global positioning system, GPS), or a laser scanner.

By way of example, and not limitation, in embodiments of this application, the UE may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

However, if the various UEs described above are located in a vehicle (for example, placed in the vehicle or mounted in the vehicle), the UEs may be all considered as vehicle-mounted user equipment. For example, the vehicle-mounted user equipment is also referred to as an on-board unit (on-board unit, OBU). This is not limited in embodiments of this application.

Embodiments of this application further relate to a network device, for example, may be an access network (Access network, AN) device. The AN device may be a device that communicates with wireless user equipment over an air interface in an access network by using one or more cells, for example, a base station NodeB (for example, an access point). The NodeB may be configured to perform mutual conversion between a received over-the-air frame and an internet protocol (IP) packet, and serve as a router between the UE and a remaining part of the access network. The remaining part of the access network may include an IP network. For example, the NodeB may be a new radio network device gNB in a fifth generation (the 5th generation, 5G) mobile communication technology NR system. The AN device may alternatively be an access network device in a vehicle-to-everything (Vehicle to Everything, V2X) technology, which is a road side unit (road side unit, RSU). The RSU may be a fixed infrastructure entity that supports V2X applications, and may exchange messages with other entities that support V2X applications. In addition, the AN device may further include a centralized unit (centralized unit, CU) and a distributed unit (distributed unit, DU) in a cloud radio access network (cloud radio access network, Cloud RAN) system. In this case, the AN device coordinates attribute management on air interfaces. The AN device is not limited in embodiments of this application.

For ease of understanding this application, related technical knowledge included in embodiments of this application is described herein first.

A fifth generation mobile communication system uses a new radio (New Radio, NR) standard developed by 3GPP. 5G NR defines two frequency ranges: an FR 1 and an FR 2. The FR 1 includes a frequency band below 6 GHz, and the FR 2 includes a millimeter wave frequency band ranging from 20 GHz to 60 GHz. 5G NR defines two transmission standards: TDD and FDD. In the TDD transmission standard, in a process in which a network device performs time division scheduling, a minimum scheduling unit is one slot (slot), and each slot includes several orthogonal frequency division multiplexing (Orthogonal Frequency Division Multiplexing, OFDM) symbols. Slots are mainly classified into a downlink (DownLink, DL) slot, an uplink (UpLink, UL) slot, and a mixed (Mixing) slot. The mixed slot is also referred to as a special (Special) slot, namely, an S slot. The DL slot includes only a DL symbol, the UL slot includes only a UL symbol, and the mixed slot includes three types of symbols: a DL symbol, a gap symbol, and a UL symbol.

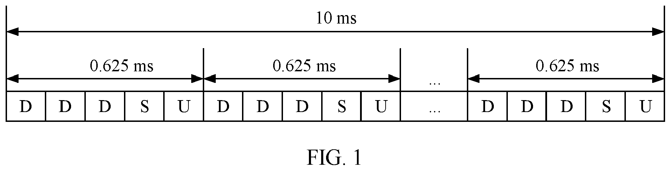

In a process of allocating a time domain resource to a terminal device, the network device divides one radio frame into a plurality of DL slots, a plurality of S slots, and a plurality of UL slots based on a preset slot configuration. For example, when a subcarrier spacing is 120 kHz, the radio frame may be divided based on an uplink-downlink slot configuration D:U=4:1, and a symbol configuration D:gap:U=10:2:2 in an S slot. The symbol configuration D:gap:U=10:2:2 in an S slot means that each S slot includes 10 DL symbols, two gap symbols, and two UL symbols. As shown in FIG. 1, based on a division manner: a slot configuration D:U=4:1 and D:gap:U=10:2:2, one radio frame may be divided into 16 slot configurations. One slot configuration includes four DL slots, one mixed slot, and one UL slot. FIG. 1 shows only some slot configurations. D, S, and U in FIG. 1 respectively represent a DL slot, a mixed slot, and a UL slot. D, S, and U in subsequent accompanying drawings all represent the DL slot, the mixed slot, and the UL slot. Details are not described again.

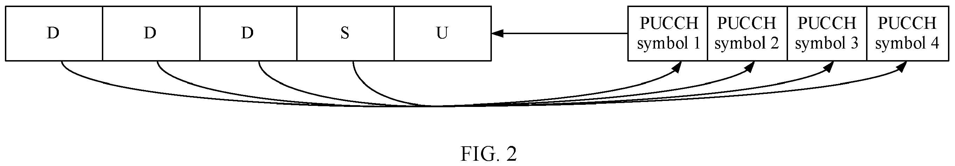

For universality of a system, due to constraints such as a protocol and a resource, one UL symbol for an information feedback is allocated, in a UL slot in each slot configuration, to each slot including a PDSCH symbol (that is, a DL slot in the slot configuration), to provide a feedback for a downlink transmission process of each DL slot. As shown in FIG. 2 (where FIG. 2 shows a case of one slot configuration), one corresponding PUCCH symbol, namely, a PUCCH resource (for example, a PUCCH symbol 1, a PUCCH symbol 2, a PUCCH symbol 3, and a PUCCH symbol 4 shown in FIG. 2) is allocated, in a UL slot, to each DL slot and each mixed slot. Each PUCCH resource is used by the terminal device to provide a HARQ feedback for a downlink transmission process through a PUCCH. For another example, a sounding reference signal (Sounding Reference Signal, SRS) symbol, namely, an SRS resource, may be alternatively allocated in the UL slot. The SRS resource is used by the terminal device to send an SRS to the network device, so that the network device estimates uplink channel quality.

It can be learned that a quantity of PUCCH resources allocated in a UL slot of one slot configuration is related to a quantity of DL slots. In this case, generally, four PUCCH resources (four UL symbols) need to be reserved in the UL slot for information feedback. This time domain resource (PUCCH resource) allocation mode is fixed. In addition, uplink and downlink data can be transmitted only on a physical uplink shared channel (Physical Uplink Share Channel, PUSCH). In other words, four reserved PUCCH resources cannot be used for data transmission. In actual application, when a quantity of terminal devices currently accessing the network device is small, there are remaining PUCCH resources. Because these remaining PUCCH resources occupy uplink resources in a UL slot and cannot be used for uplink data transmission, an uplink throughput is limited, and uplink data transmission efficiency is reduced. When a quantity of terminal devices currently accessing the network device is large, a large quantity of PUCCH resources are required. As a result, a network device may fail to allocate a corresponding PUCCH resource to a terminal device, and cannot perform downlink data transmission with the terminal device. Consequently, downlink transmission of the terminal device fails, a downlink throughput is affected, and downlink data transmission efficiency is reduced.

Therefore, in an existing time domain resource allocation mode, an uplink throughput and a downlink throughput are affected, and uplink and downlink data transmission efficiency is reduced.

It should be first noted that, in this application, an example in which a subcarrier spacing is 120 kHz, in other words, one radio frame is 10 ms, and a downlink slot configuration is D:U=4: 1, and a symbol configuration in an S slot is D:gap:U=10:2:2 is for describing a time domain resource allocation process. A time domain resource allocation mode corresponding to another subcarrier spacing or another slot configuration is similar to the time domain resource allocation mode described in this application, and is not described. In addition, in a process of describing time domain resource allocation, one slot configuration in one radio frame is used as an example for specific descriptions. For another slot configuration in the radio frame, refer to the slot configuration. Details are not described again.

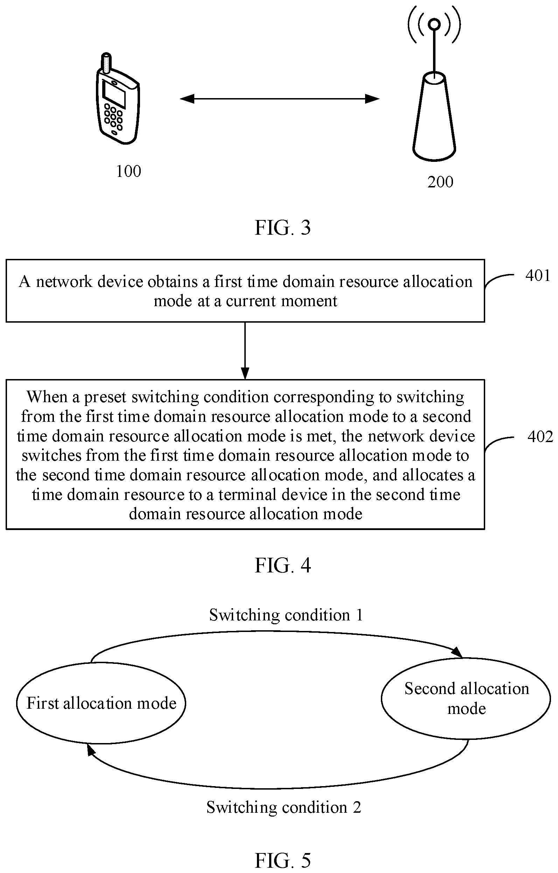

FIG. 3 is a diagram of a network architecture of a time domain resource allocation system according to an embodiment of this application. The time domain resource allocation system includes a network device 100 and a terminal device 200.

The network device 100 obtains a first time domain resource allocation mode at a current moment. When a preset switching condition corresponding to switching from the first time domain resource allocation mode to a second time domain resource allocation mode is met, the network device 100 switches from the first time domain resource allocation mode to the second time domain resource allocation mode, and allocates a time domain resource to the terminal device 200 in the second time domain resource allocation mode. The network device 100 performs uplink communication or downlink communication with the terminal device 200 via the allocated time domain resource.

A quantity of time domain resources (PUCCH resources) allocated to the terminal device in the second time domain resource allocation mode is different from that in the first time domain resource allocation mode, and one of the second time domain resource allocation mode and the first time domain resource allocation mode may allocate a relatively large quantity of time domain resources to the terminal device, and the other time domain resource allocation mode may allocate a relatively small quantity of time domain resources to the terminal device.

It can be learned that, in this embodiment of this application, the network device may allocate a PUCCH resource to the terminal device in different time domain resource allocation modes. To be specific, when the terminal device has a relatively large requirement for PUCCH resources, one time domain resource allocation mode is used for allocating resources to meet the requirement of the terminal device, and when the terminal device has a relatively small requirement for PUCCH resources, another time domain resource allocation mode may be used for allocating time domain resources to the terminal device. Therefore, the network device may respectively perform time domain resource allocation based on different requirements of the terminal device, so that time domain resource allocation is flexible, and PUCCH resources are not excessive or insufficient. This improves an uplink throughput and a downlink throughput, and improves uplink and downlink data transmission efficiency.

FIG. 4 is a schematic flowchart of a time domain resource allocation method according to an embodiment of this application. The method is applied to a network device. The method in this embodiment of this application includes the following steps.

401: The network device obtains a first time domain resource allocation mode at a current moment.

The current moment is a moment at which timing of a timer ends, and the timer is for triggering whether to switch a time domain resource allocation mode. To be specific, at the moment at which timing of the timer ends, the network device obtains the first time domain resource allocation mode at the current moment, and determines, based on the first time domain resource allocation mode, whether the time domain resource allocation mode needs to be switched. A timing period of the timer may be duration of one radio frame or another value. This is not limited in this application.

402: When a preset switching condition corresponding to switching from the first time domain resource allocation mode to a second time domain resource allocation mode is met, the network device switches from the first time domain resource allocation mode to the second time domain resource allocation mode, and allocates a time domain resource to a terminal device in the second time domain resource allocation mode.

The time domain resource includes a PUCCH resource and/or an SRS resource. The PUCCH resource includes at least one of the following: a scheduling request (Scheduling Request, SR) resource, a beam management (Beam Management, BM) resource, and a HARQ resource. The SRS resource is used by the terminal device to send an SRS to the network device, so that the network device estimates uplink channel quality. The SR resource is used by the terminal device to actively initiate an SR to the network device. The BM resource is used by the terminal device to provide a BM feedback to the network device. The HARQ resource is used by the terminal device to provide a HARQ feedback to the network device.

For example, the first time domain resource allocation mode is a first allocation mode or a second allocation mode. The second time domain resource allocation mode is the first allocation mode or the second allocation mode. The network device allocates more PUCCH resources to the terminal device in the second allocation mode than in the first allocation mode. In other words, the first allocation mode is used in a scenario in which a relatively small quantity of PUCCH resources are required, and the second allocation mode is used in a scenario in which a relatively large quantity of PUCCH resources are required. In this application, the network device allocates more HARQ resources to the terminal device in the second allocation mode than in the first allocation mode.

In addition, the first time domain resource allocation mode and the second time domain resource allocation mode are different time domain resource allocation modes. In other words, when the first time domain resource allocation mode is the first allocation mode, the second time domain resource allocation mode is the second allocation mode; or when the first time domain resource allocation mode is the second allocation mode, the second time domain resource allocation mode is the first allocation mode. As shown in FIG. 5, the time domain resource allocation mode may be switched from the first allocation mode to the second allocation mode, or may be switched from the second allocation mode to the first allocation mode.

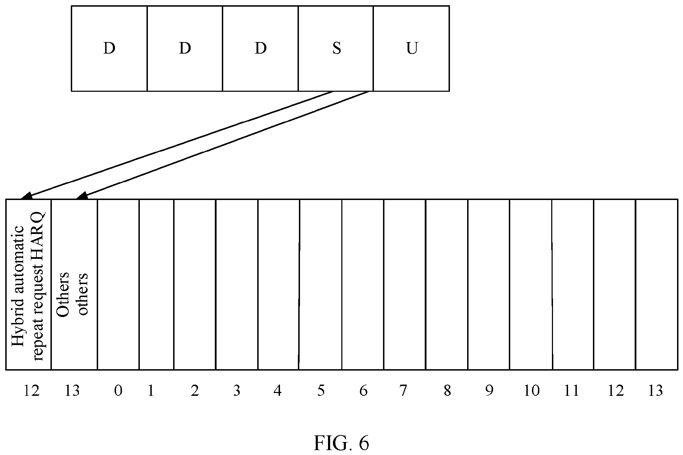

For example, the first allocation mode includes allocating one or more first symbols and one or more second symbols in a mixed slot. Each first symbol is for a HARQ feedback, in other words, each first symbol is one HARQ resource. Each second symbol is for a scheduling request, a beam management feedback, a sounding reference signal, or a hybrid automatic repeat request feedback, in other words, each second symbol is one of an SR resource, a BM resource, an SRS resource, or a HARQ resource. Because a quantity of terminal devices accessing the network device is small, a PUCCH resource originally reserved in a UL slot may be transferred to the mixed slot for reservation. In this case, uplink data transmission can be performed on all UL symbols in the UL slot, to improve uplink transmission efficiency and an uplink throughput. As shown in FIG. 6, because there are only two UL symbols in a mixed slot shown in FIG. 6, one UL symbol, namely, a twelfth symbol, may be allocated as a HRAQ resource, and the other UL symbol, namely, a thirteenth symbol, may be allocated as an others resource. The others resource is one of the SR resource, the BM resource, the SRS resource, or the HARQ resource.

It should be noted that a specific form of a time domain resource corresponding to each UL symbol in each mixed slot is not limited in this application. For example, in actual application, the twelfth symbol may be allocated as the others resource, and the thirteenth symbol may be allocated as the HRAQ resource. In addition, if a quantity of UL symbols in each mixed slot is large, more HRAQ resources may be allocated to the terminal device by using more UL symbols, and more others resources may be allocated to the terminal device by using more UL symbols. Quantities and forms of HRAQ resources and others resources in the mixed slot are not limited in this application.

The following uses an example to describe a mode in which the network device allocates the others resource to the terminal device.

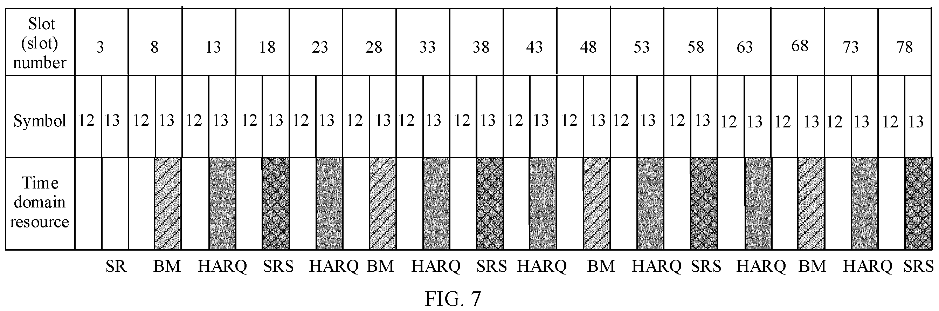

For one radio frame, there are 16 slot configurations. Therefore, the radio frame may have 16 mixed slots, and different others resources may be configured for the terminal device in different mixed slots. For example, others resources may be configured in a staggered manner. As shown in FIG. 7, in one radio frame, an SR resource, a BM resource, an SRS resource, or a HARQ resource may be configured in a staggered manner. For example, an others resource configured in a third slot, namely, the 1^{st} mixed slot, is an SR resource, and an others resource configured in an eighth slot, namely, the 2^{nd} mixed slot, is a BM resource. Certainly, in actual application, an others resource corresponding to each mixed slot may be configured in various allocation modes, and a type of the others resource in each mixed slot is not limited. For example, the others resource configured in the 1^{st} mixed slot may be a BM resource. In addition, a same others resource may be configured in adjacent mixed slots. For example, all mixed slots in one radio frame may be configured as HARQ resources. A mode of configuring the others resource is not limited in this application.

For example, the second allocation mode includes allocating a plurality of third symbols in an uplink slot, and allocating a fourth symbol and a fifth symbol in mixed slot allocation. Each third symbol is for a HARQ feedback, and each third symbol is one HARQ resource. In this case, a quantity of third symbols is greater than a quantity of first symbols. In other words, the second allocation mode is for allocating more HARQ resources to the terminal device, so that more terminal devices can obtain HARQ resources. Therefore, the second allocation mode is applicable to a scenario with a large quantity of terminal devices. The third symbol is for a scheduling request and/or a beam management feedback. In other words, the fourth symbol is an SR resource or a BM resource. The fifth symbol is used by the terminal device to send an SRS. In other words, the fifth symbol is an SRS resource.

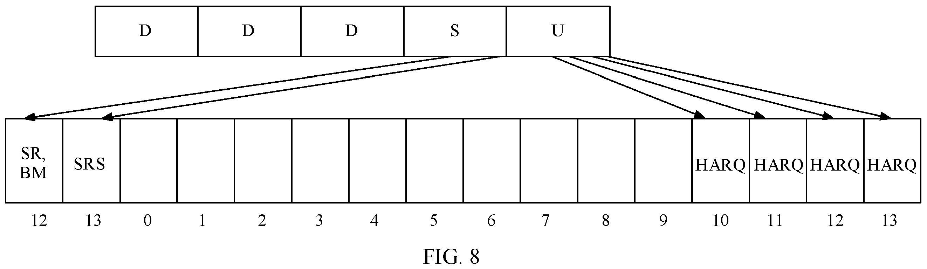

For example, as shown in FIG. 8, four third symbols (namely, four HARQ resources) may be allocated in the UL slot, and one fourth symbol and one fifth symbol may be allocated in the mixed slot. For example, the last four UL symbols in the UL slot may be used as the four third symbols, so that the terminal device provides a HARQ feedback by using the four DL symbols. Certainly, in actual application, a UL symbol at another location in the UL slot may be used as the third symbol. A location of the third symbol in the UL slot is not limited in this application. As shown in FIG. 8, a twelfth symbol in the mixed slot, namely, the 1^{st} UL symbol in the mixed slot, may be used as the fourth symbol, and a thirteenth symbol, namely, the 2^{nd} UL symbol, may be used as the fifth symbol.

Generally, allocating four HARQ resources in the UL slot can meet requirements of a large quantity of terminal devices. However, in actual application, if more HARQ resources need to be allocated, the more HARQ resources (third symbols) may be allocated to terminal devices in the UL slot, to meet requirements of the terminal devices. In addition, a specific form of a time domain resource corresponding to each UL symbol in each mixed slot is not limited in this application. For example, in actual application, the twelfth symbol may be used as the fifth symbol, in other words, the twelfth symbol is allocated as the SRS resource. The thirteenth symbol is used as the fourth symbol, in other words, the thirteenth symbol is allocated as the SR resource or the BM resource. In addition, if there are a large quantity of UL symbols in the mixed slot, more UL symbols may be used for allocating more SRS resources, BM resources, and SR resources to the terminal device. Quantities of SRS resources, BM resources, and SR resources allocated in the mixed slot are not limited in this application.

It can be learned that when the terminal device requires a large quantity of PUCCH resources, the second allocation mode may be switched to. More PUCCH resources are allocated to the terminal device in the second allocation mode, so that a corresponding PUCCH resource can be allocated to each terminal device. Therefore, a downlink transmission failure does not occur, and a downlink throughput and downlink data transmission efficiency are improved. In addition, the SRS resource, the BM resource, and the SR resource are configured in the mixed slot as much as possible, and the UL symbol in the UL slot is not occupied. This ensures that the terminal device can have a large quantity of uplink resources when the downlink throughput is improved, and improves uplink transmission efficiency.

For example, when the second time domain resource allocation mode is the first allocation mode, as shown in FIG. 5, the preset switching condition is also referred to as a switching condition 2. In other words, when the first time domain resource allocation at the current moment is the second allocation mode and the switching condition 2 is met, the network device switches the time domain resource allocation mode from the second allocation mode to the first allocation mode. The switching condition 2 includes at least one of the following:
a quantity of terminal devices accessing the network device is less than a preset terminal quantity N₁;
a quantity of beams used by a terminal device that accesses the network device is less than a preset beam quantity M₁;
a downlink physical resource block utilization is less than a preset utilization R₁;
a downlink data buffer size is less than a preset buffer size L₁;
a ratio of an uplink physical resource block utilization to the downlink physical resource block utilization is greater than a preset ratio K₁; and
a quantity of terminal devices whose downlink data buffer sizes are greater than a preset buffer size L₂ is less than a preset terminal quantity N₂.

For example, when the second time domain resource allocation mode is the second allocation mode, as shown in FIG. 5, the preset switching condition is also referred to as a switching condition 1. In other words, when the first time domain resource allocation at the current moment is the first allocation mode and the switching condition 1 is met, the network device switches the time domain resource allocation mode from the first allocation mode to the second allocation mode. The switching condition 1 includes at least one of the following:
a quantity of terminal devices accessing the network device is greater than a preset terminal quantity N₃;
a quantity of beams used by a terminal device that accesses the network device is greater than a preset beam quantity M₂;
a downlink physical resource block utilization is greater than a preset utilization R₂;
a downlink data buffer size is greater than a preset buffer size L₃;
a ratio of an uplink physical resource block utilization to the downlink physical resource block utilization is less than a preset ratio K₂; and
a quantity of terminal devices whose downlink data buffer sizes are greater than the preset buffer size L₂ is greater than a preset terminal quantity N₄.

For N₁ N₂, N₃, N₄, M1, M₂, R₁, R₂, L₁, L₃, K₁, and K₂, N₁≤N₃, M1≤M₂, R₁≤R₂, L₁≤L₃, K₁≤K₂, and N₂≤N₄.

It should be noted that when a cell is initially established, that is, during initialization, to ensure that each terminal device has a PUCCH resource, the network device allocates a time domain resource to the terminal device in the second allocation mode.

In some possible implementations, although more PUCCH resources need to be allocated when there are a large quantity of terminal devices, in actual application, excessive PUCCH resources may not be directly allocated. Therefore, the second allocation mode may be divided at a finer granularity, to be specific, the second allocation mode is divided into a plurality of second allocation sub-modes. Quantities of PUCCH resources allocated in any two second allocation sub-modes are different, quantities of PUCCH resources allocated in the plurality of second allocation sub-modes increase sequentially, and a quantity of PUCCH resources allocated in any second allocation sub-mode is greater than that in the first allocation mode. That a quantity of PUCCH resources allocated in any second allocation sub-mode is greater than that in the first allocation mode means that in this application, in one slot configuration, a quantity of HARQ resources allocated in any second allocation sub-mode is greater than that in the first allocation mode.

Therefore, the first time domain resource allocation mode may be the first allocation mode or any one of the plurality of second allocation sub-modes, and the second time domain resource allocation mode may be the first allocation mode or any one of the plurality of second allocation sub-modes. Similarly, the first time domain resource allocation mode and the second time domain resource allocation mode are different time domain resource allocation modes.

For any second allocation sub-mode, a time domain resource allocation mode of the second allocation sub-mode includes: allocating, in the uplink slot, a plurality of sixth symbols corresponding to the second allocation sub-mode, and allocating, in the mixed slot, a seventh symbol and an eighth symbol that correspond to the second allocation sub-mode. Each sixth symbol is for the hybrid automatic repeat request feedback, and a quantity of sixth symbols is greater than the quantity of first symbols but less than or equal to the quantity of third symbols. The seventh symbol is for the scheduling request and/or the beam management feedback. The eighth symbol is for the sounding reference signal.

In this application, an example in which the plurality of second allocation sub-modes are a second allocation sub-mode A, a second allocation sub-mode B, and a second allocation sub-mode C is used for detailed description, but a quantity and types of the second allocation sub-modes are not limited. Time domain resource allocation modes corresponding to more second allocation sub-modes are similar to the three second allocation sub-modes, and details are not described. Quantities of PUCCH resources (namely, HARQ resources) allocated in the second allocation sub-mode A, the second allocation sub-mode B, and the second allocation sub-mode C sequentially increase. The second allocation sub-mode C is the second allocation sub-mode mentioned above. The two allocation sub-modes are essentially consistent, and are not substantially distinguished.

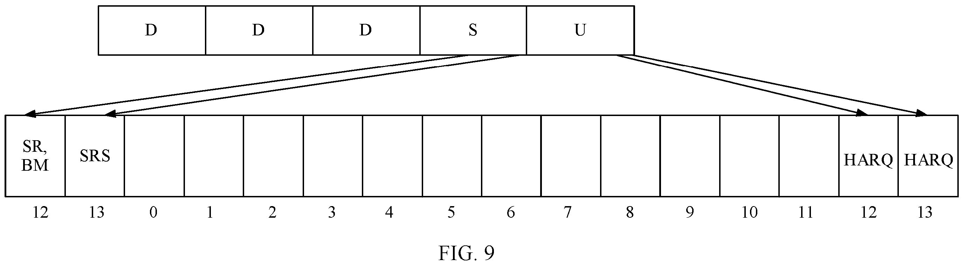

For example, as shown in FIG. 9, a time domain resource allocation mode of the second allocation sub-mode A includes: allocating two HARQ resources in a UL slot, to be specific, allocating two HARQ resources to a terminal device in the last two DL symbols in the UL slot; and allocating one SR resource and/or one BM resource in a mixed slot, and allocating one SRS resource in the mixed slot, to be specific, allocating one SR resource and/or one BM resource and one SRS resource to the terminal device in the last two symbols in the mixed slot. Similarly, FIG. 9 is merely an example for describing time domain resource allocation in the second allocation sub-mode A. A specific time domain resource allocation mode of the second allocation sub-mode A is not limited in this application.

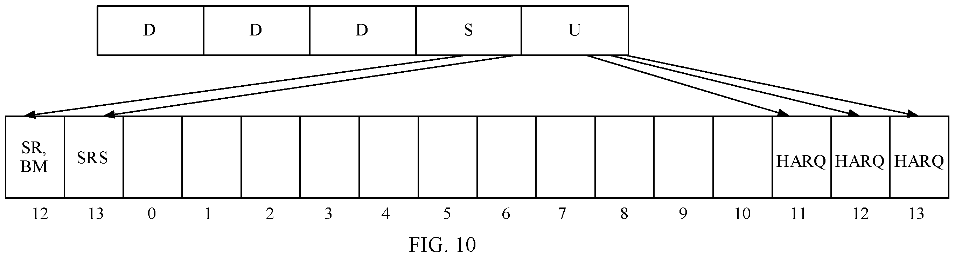

For example, as shown in FIG. 10, a time domain resource allocation mode of the second allocation sub-mode B includes: allocating three HARQ resources in a UL slot, to be specific, allocating three HARQ resources to a terminal device in the last three DL symbols in the UL slot; and allocating one SR resource and/or one BM resource in a mixed slot, and allocating one SRS resource in the mixed slot, to be specific, allocating one SR resource and/or one BM resource and one SRS resource to the terminal device in the last two symbols in the mixed slot. Similarly, FIG. 10 is merely an example for describing time domain resource allocation in the second allocation sub-mode B. A specific time domain resource allocation mode of the second allocation sub-mode B is not limited in this application.

A time domain resource allocation mode of the second allocation sub-mode C is similar to the second allocation mode shown in FIG. 8, and details are not described again.

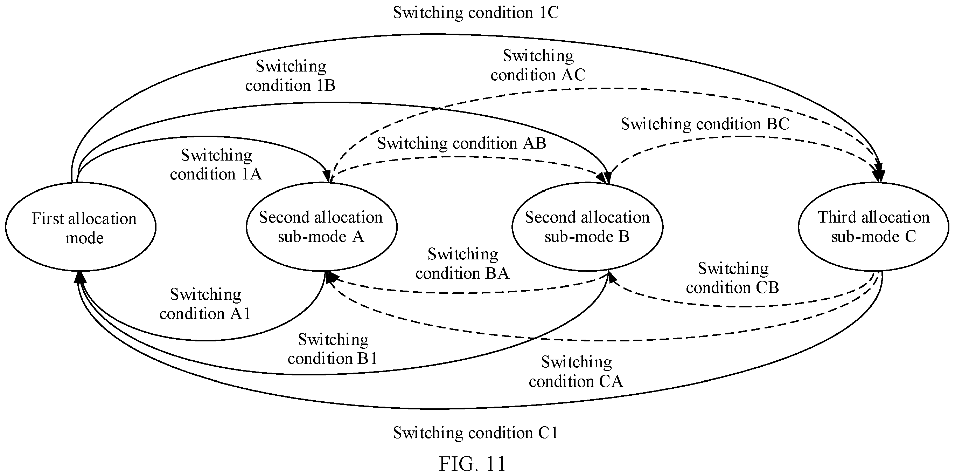

Therefore, as shown in FIG. 11, a specific switching form of switching from the first time domain resource allocation mode to the second time domain resource allocation mode and a preset switching condition corresponding to the switching form are as follows.

When the first time domain resource allocation mode is the first allocation mode, the network device may switch from the first allocation mode to the second allocation sub-mode A, the second allocation sub-mode B, or the second allocation sub-mode C. A preset switching condition corresponding to switching from the first allocation mode to the second allocation sub-mode A is referred to as a switching condition 1A. A preset switching condition corresponding to switching from the first allocation mode to the second allocation sub-mode B is referred to as a switching condition 1B. A preset switching condition corresponding to switching from the first allocation mode to the second allocation sub-mode C is referred to as a switching condition 1C.

When the first time domain resource allocation mode is the second allocation sub-mode A, the network device may switch from the second allocation sub-mode A to the first allocation mode, the second allocation sub-mode B, or the second allocation sub-mode C. A preset switching condition corresponding to switching from the second allocation sub-mode A to the first allocation mode is referred to as a switching condition A1. A preset switching condition corresponding to switching from the second allocation sub-mode A to the second allocation sub-mode B is referred to as a switching condition AB. A preset switching condition corresponding to switching from the second allocation sub-mode A to the second allocation sub-mode C is referred to as a switching condition AC.

When the first time domain resource allocation mode is the second allocation sub-mode B, the network device may switch from the second allocation sub-mode B to the first allocation mode, the second allocation sub-mode A, or the second allocation sub-mode C. A preset switching condition corresponding to switching from the second allocation sub-mode B to the first allocation mode is referred to as a switching condition B1. A preset switching condition corresponding to switching from the second allocation sub-mode B to the second allocation sub-mode A is referred to as a switching condition BA. A preset switching condition corresponding to switching from the second allocation sub-mode B to the second allocation sub-mode C is referred to as a switching condition BC.

When the first time domain resource allocation mode is the second allocation sub-mode C, the network device may switch from the second allocation sub-mode C to the first allocation mode, the second allocation sub-mode A, or the second allocation sub-mode B. A preset switching condition corresponding to switching from the second allocation sub-mode C to the first allocation mode is referred to as a switching condition C1. A preset switching condition corresponding to switching from the second allocation sub-mode C to the second allocation sub-mode A is referred to as a switching condition CA. A preset switching condition corresponding to switching from the second allocation sub-mode C to the second allocation sub-mode B is referred to as a switching condition CB.

In actual application, the switching condition A1, the switching condition B1, and the switching condition C1 may be the same or different. In this application, an example in which the switching condition A1, the switching condition B 1, and the switching condition C are the same is used for description, and the switching condition A1, the switching condition B1, and the switching condition C are collectively referred to as a switching condition 3.

For example, the switching condition 1A includes at least one of the following:
a quantity of terminal devices accessing the network device is greater than a preset terminal quantity N_{1A} but less than a preset terminal quantity N_{2A};
a quantity of beams used by a terminal device that accesses the network device is greater than a preset beam quantity M_{1A} but less than a preset beam quantity M_{2A};
a downlink physical resource block utilization is greater than a preset utilization R_{1A} but less than a preset utilization R_{2A};
a downlink data buffer size is greater than a preset buffer size L_{1A} but less than a preset buffer size L_{2A};
a ratio of an uplink physical resource block utilization to the downlink physical resource block utilization is less than a preset ratio K_{1A} but greater than a preset ratio K_{2A}; and
a quantity of terminal devices whose downlink data buffer sizes are greater than the preset buffer size L₂ is greater than a preset terminal quantity N_{3A} but less than a preset terminal quantity N_{4A}.

For example, the switching condition 1B includes at least one of the following:
a quantity of terminal devices accessing the network device is greater than a preset terminal quantity N_{1B} but less than a preset terminal quantity N_{2B};
a quantity of beams used by a terminal device that accesses the network device is greater than a preset beam quantity M_{1B} but less than a preset beam quantity M_{2B};
a downlink physical resource block utilization is greater than a preset utilization R_{1B} but less than a preset utilization R_{2B};
a downlink data buffer size is greater than a preset buffer size L_{1B} but less than a preset buffer size L_{2B};
a ratio of an uplink physical resource block utilization to the downlink physical resource block utilization is less than a preset ratio K_{1B} but greater than a preset ratio K_{2B}; and
a quantity of terminal devices whose downlink data buffer sizes are greater than the preset buffer size L₂ is greater than a preset terminal quantity N_{3B} but less than a preset terminal quantity N_{4B}.

For example, the switching condition 1C includes at least one of the following:
a quantity of terminal devices accessing the network device is greater than a preset terminal quantity N_{1C};
a quantity of beams used by a terminal device that accesses the network device is greater than a preset beam quantity M_{1C};
a downlink physical resource block utilization is greater than a preset utilization R_{1C};
a downlink data buffer size is greater than a preset buffer size L_{1C};
a ratio of an uplink physical resource block utilization to the downlink physical resource block utilization is less than a preset ratio K_{1C}; and
a quantity of terminal devices whose downlink data buffer sizes are greater than the preset buffer size L₂ is greater than a preset terminal quantity N_{2C}.
N_{1C}≥N_{2B}, N_{1B}≥N_{2A}, M_{1C}≥M_{2B}, M_{1B}≥M_{ZA}, R_{1C}≥R_{2B}, R_{1B}≥R_{2A}, L_{1C}≥L_{2B}, L_{1B}≥L_{2A}, K_{1C}≤K_{2B}, K_{1B}≤K_{2A}, N_{2C}≥N_{4B}, and N_{3B}≥N_{4A}.

For example, the switching condition AB includes at least one of the following:
a quantity of terminal devices accessing the network device is greater than a preset terminal quantity N_{AB1} but less than a preset terminal quantity N_{AB2};
a quantity of beams used by a terminal device that accesses the network device is greater than a preset beam quantity M_{AB1} but less than a preset beam quantity M_{AB2};
a downlink physical resource block utilization is greater than a preset utilization R_{AB1} but less than a preset utilization R_{AB2};
a downlink data buffer size is greater than a preset buffer size L_{AB1} but less than a preset buffer size L_{AB2};
a ratio of an uplink physical resource block utilization to the downlink physical resource block utilization is less than a preset ratio K_{AB1} but greater than a preset ratio K_{AB2}; and
a quantity of terminal devices whose downlink data buffer sizes are greater than the preset buffer size L₂ is greater than a preset terminal quantity N_{AB3} but less than a preset terminal quantity N_{AB4}.

For example, the switching condition AC includes at least one of the following:
a quantity of terminal devices accessing the network device is greater than a preset terminal quantity N_{AC1};
a quantity of beams used by a terminal device that accesses the network device is greater than a preset beam quantity M_{AC},
a downlink physical resource block utilization is greater than a preset utilization R_{AC};
a downlink data buffer size is greater than a preset buffer size L_{AC};
a ratio of an uplink physical resource block utilization to the downlink physical resource block utilization is less than a preset ratio K_{AC}; and
a quantity of terminal devices whose downlink data buffer sizes are greater than the preset buffer size L₂ is greater than a preset terminal quantity N_{AC2}.

For example, the switching condition BC includes at least one of the following:
a quantity of terminal devices accessing the network device is greater than a preset terminal quantity N_{BC1};
a quantity of beams used by a terminal device that accesses the network device is greater than a preset beam quantity M_{BC};
a downlink physical resource block utilization is greater than a preset utilization R_{BC};
a downlink data buffer size is greater than a preset buffer size L_{BC};
a ratio of an uplink physical resource block utilization to the downlink physical resource block utilization is less than a preset ratio K_{BC}; and
a quantity of terminal devices whose downlink data buffer sizes are greater than the preset buffer size L₂ is greater than a preset terminal quantity N_{BC2}.
N_{AC1}≥N_{AB2}, M_{AC}≥M_{AB2}, R_{AC}≥R_{AB2}, L_{AC}≥L_{AB2}, K_{AC}≤K_{AB2}, and N_{AC2}≥N_{AB4}.

For example, the switching condition BA includes at least one of the following:
a quantity of terminal devices accessing the network device is greater than a preset terminal quantity N_{BA1} but less than a preset terminal quantity N_{BA2};
a quantity of beams used by a terminal device that accesses the network device is greater than a preset beam quantity M_{BA1} but less than a preset beam quantity M_{BA2},
a downlink physical resource block utilization is greater than a preset utilization R_{BA1} but less than a preset utilization R_{BA2};
a downlink data buffer size is greater than a preset buffer size L_{BA1} but less than a preset buffer size L_{BA2};
a ratio of an uplink physical resource block utilization to the downlink physical resource block utilization is greater than a preset ratio K_{BA1} but less than a preset ratio K_{BA2}, and
a quantity of terminal devices whose downlink data buffer sizes are greater than the preset buffer size L₂ is greater than a preset terminal quantity N_{BA3} but less than a preset terminal quantity N_{BA4}.

For example, the switching condition CA includes at least one of the following:
a quantity of terminal devices accessing the network device is greater than a preset terminal quantity N_{CA1} but less than a preset terminal quantity N_{CA2};
a quantity of beams used by a terminal device that accesses the network device is greater than a preset beam quantity M_{CA1} but less than a preset beam quantity M_{CA2};
a downlink physical resource block utilization is greater than a preset utilization R_{CA1} but less than a preset utilization R_{CA2};
a downlink data buffer size is greater than a preset buffer size L_{CA1} but less than a preset buffer size L_{CA2};
a ratio of an uplink physical resource block utilization to the downlink physical resource block utilization is greater than a preset ratio K_{CA1} but less than a preset ratio K_{CA2}; and
a quantity of terminal devices whose downlink data buffer sizes are greater than the preset buffer size L₂ is greater than a preset terminal quantity N_{CA3} but less than a preset terminal quantity N_{CA4}.

For example, the switching condition CB includes at least one of the following:
a quantity of terminal devices accessing the network device is greater than a preset terminal quantity N_{CB1} but less than a preset terminal quantity N_{CB2};
a quantity of beams used by a terminal device that accesses the network device is greater than a preset beam quantity M_{CB1} but less than a preset beam quantity M_{CB2};
a downlink physical resource block utilization is greater than a preset utilization R_{CB1} but less than a preset utilization R_{CB2};
a downlink data buffer size is greater than a preset buffer size L_{CB1} but less than a preset buffer size L_{CB2};
a ratio of an uplink physical resource block utilization to the downlink physical resource block utilization is greater than a preset ratio K_{CB1} but less than a preset ratio K_{CB2}; and
a quantity of terminal devices whose downlink data buffer sizes are greater than the preset buffer size L₂ is greater than a preset terminal quantity N_{CB3} but less than a preset terminal quantity N_{CB4}.
N_{CB1}≥N_{CA2}, M_{CB1}≥M_{CA2}, R_{CA1}≥R_{CB2}, L_{CB1}≥L_{CA2}, K_{CB1}≥K_{CA2}, and N_{CB3}≥N_{CA4}.

For example, the switching condition 3 includes at least one of the following:
a quantity of terminal devices accessing the network device is less than a preset terminal quantity N₅;
a quantity of beams used by a terminal device that accesses the network device is less than a preset beam quantity M₃;
a downlink physical resource block utilization is less than a preset utilization R₃;
a downlink data buffer size is less than a preset buffer size L₄;
a ratio of an uplink physical resource block utilization to the downlink physical resource block utilization is greater than a preset ratio K₃; and
a quantity of terminal devices whose downlink data buffer sizes are greater than the preset buffer size L₂ is less than a preset terminal quantity N₆.

It should be noted that corresponding switching conditions may be different or the same when different allocation modes are switched to a same allocation mode. This is not limited in this application. For example, corresponding switching conditions may be the same or different when the first allocation mode and the second allocation sub-mode B are switched to the second allocation sub-mode A. This is not limited in this application.

Therefore, N_{1A}, N_{BA1}, and N_{CA1} may be the same or different. This is not limited in this application.

Similarly, N_{2A}, N_{BA2}, and N_{CA2} may be the same or different. M_{1A}, M_{BA1}, and M_{CA1} may be the same or different. M_{2A}, M_{BA2}, and M_{CA2} may be the same or different. R_{1A}, R_{BA1}, and R_{CA1} may be the same or different. R_{2A}, R_{BA2}, and R_{CA2} may be the same or different. L_{1A}, L_{BA1}, and L_{CA1} may be the same or different. L_{2A}, L_{BA2}, and L_{CA2} may be the same or different. K_{1A}, K_{BA1}, and K_{CA1} may be the same or different. K_{2A}, K_{BA2}, and K_{CA2} may be the same or different. N_{3A}, N_{BA3}, and N_{CA3} may be the same or different. N_{4A}, N_{BA4}, and N_{CA4} may be the same or different.

N_{1B}, N_{AB1}, and N_{CB1} may be the same or different. This is not limited in this application.

Similarly, N_{2B}, N_{AB2}, and N_{CV2} may be the same or different. M_{1B}, M_{AB1}, and M_{CB1} may be the same or different. M_{2B}, M_{AB2}, and M_{CB2} may be the same or different. R_{1B}, R_{AB1}, and R_{CB1} may be the same or different. R_{2B}, R_{AB2}, and R_{CB2} may be the same or different. L_{1B}, L_{AB1}, and L_{CB1} may be the same or different. L_{2B}, L_{AB2}, and L_{CB2} may be the same or different. K_{1B}, K_{AB1}, and K_{CB1} may be the same or different. K_{2B}, K_{AB2}, and K_{CB2} may be the same or different. N_{3B}, N_{AB3}, and N_{CB3} may be the same or different. N_{4B}, N_{AB4}, and N_{CB4} may be the same or different.

N_{1C}, N_{AC1}, and N_{BC1} may be the same or different. M_{1C}, M_{AC}, and M_{BC} maybe the same or different. R_{1C}, R_{AC}, and R_{BC} may be the same or different. L_{1C}, L_{AC}, and L_{BC} may be the same or different. K_{1C}, K_{AC}, and K_{BC} may be the same or different. N_{2C}, N_{AC2}, and N_{BC2} may be the same or different.

It should be noted that when a cell is initially established, that is, during initialization, to ensure that each terminal device has a PUCCH resource, the network device allocates a time domain resource to the terminal device in the second allocation sub-mode C.

It should be noted that, regardless of which allocation mode is used by the network device to allocate the time domain resource to the terminal device, after allocating the time domain resource to the terminal device, the network device may indicate, via an indication message, a specific location of the time domain resource, that is, notify the terminal device of a specific slot and a specific symbol in which the time domain resource is located. For example, for the SR resource and the BM resource, the network device may notify the terminal device of specific locations of the SR resource and the BM resource via RRC signaling in a radio resource control (Radio Resource Control, RRC) connection process. For the SRS resource, the network device may notify the terminal device of a specific location of the SRS resource via downlink control information (Downlink Control Information, DCI). For the HARQ resource, the network device may notify the terminal device of a specific location of the HARQ resource via downlink DCI.

It can be learned that, in this embodiment of this application, the network device may allocate a PUCCH resource to the terminal device in different time domain resource allocation modes. To be specific, when the terminal device has a relatively large requirement for PUCCH resources, one time domain resource allocation mode is used for allocating resources to meet the requirement of the terminal device, and when the terminal device has a relatively small requirement for PUCCH resources, another time domain resource allocation mode may be used for allocating time domain resources to the terminal device. Therefore, the network device may respectively perform time domain resource allocation based on different requirements of the terminal device, so that time domain resource allocation is flexible, and PUCCH resources are not excessive or insufficient. This improves an uplink throughput and a downlink throughput, and improves uplink and downlink data transmission efficiency.

It may be understood that if the network device determines that the time domain resource allocation mode does not need to be switched at a current moment, the network device continues to allocate the time domain resource to the terminal device in the first time domain resource allocation mode that corresponds to the current moment.

For example, switching from the first time domain resource allocation mode to the second time domain resource allocation mode includes switching between the first allocation mode and the second allocation mode, switching between the first allocation mode and each allocation sub-mode, and switching between second allocation sub-modes. Essentially, each resource is reconfigured to a time domain location of a symbol corresponding to the resource, and the resource includes an SR resource, a BM resource, an SRS resource, and a HARQ resource. HARQ resource reconfiguration is used as an example for descriptions. If the first time domain resource allocation mode is the first allocation mode, and the second time domain resource allocation mode is the second allocation mode, the HARQ resource is allocated in the mixed slot in the first allocation mode, for example, allocated in a twelfth symbol. However, in the second allocation mode, the HARQ resource is allocated in the last four UL symbols in the UL slot. Therefore, switching from the first allocation mode to the second allocation mode is to reconfigure the HARQ resource to time domain locations corresponding to the last four UL symbols. In addition, the SRS resource is allocated in the mixed slot regardless of the first allocation mode, the second allocation mode, or any second allocation sub-mode. Therefore, the SRS resource does not need to be reconfigured, and a time domain location corresponding to the SRS resource is limited, that is, the SRS resource is limited to a time domain location corresponding to the second time domain resource allocation mode. Then, after the indication message indicates that switching of the time domain resource allocation mode is completed, the time domain location of the SRS resource can meet a network requirement.

After allocating a corresponding time domain resource to the terminal device, the network device may perform uplink data transmission and downlink data transmission with the terminal device via the allocated time domain resource.

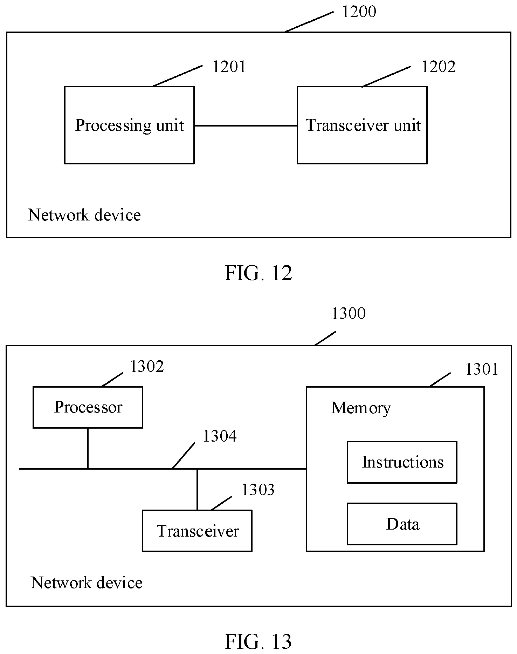

FIG. 12 is a schematic diagram of a structure of a network device according to an embodiment of this application. The network device 1200 includes a processing unit 1200 and a transceiver unit 1201.

The processing unit 1200 is configured to obtain a first time domain resource allocation mode at a current moment.

The processing unit 1200 is further configured to switch from the first time domain resource allocation mode to a second time domain resource allocation mode when a preset switching condition corresponding to switching from the first time domain resource allocation mode to the second time domain resource allocation mode is met.

The processing unit 1200 is further configured to allocate a time domain resource to a terminal device in the second time domain resource allocation mode.

In some possible implementations, the processing unit 1200 is further configured to control the transceiver unit 1201 to perform uplink communication and downlink communication with the terminal device via the allocated time domain resource.

In some possible implementations, the time domain resource includes a physical uplink control channel resource and/or a sounding reference signal resource.

In some possible implementations, the first time domain resource allocation mode is a first allocation mode or a second allocation mode.

The second time domain resource allocation mode is the first allocation mode or the second allocation mode.

The first time domain resource allocation mode and the second time domain resource allocation mode are different time domain resource allocation modes.

More uplink control channel resources are allocated in the second allocation mode than in the first allocation mode.

In some possible implementations, the first allocation mode includes allocating one or more first symbols and one or more second symbols in a mixed slot, where each first symbol is for a hybrid automatic repeat request feedback, and each second symbol is for a scheduling request, a beam management feedback, a sounding reference signal, or a hybrid automatic repeat request feedback.

The second allocation mode includes allocating a plurality of third symbols in an uplink slot, and allocating a fourth symbol and a fifth symbol in a mixed slot, where each third symbol is for a hybrid automatic repeat request feedback, a quantity of third symbols is greater than a quantity of first symbols, the fourth symbol is for a scheduling request and/or a beam management feedback, and the fifth symbol is for a sounding reference signal.

In some possible implementations, when the second time domain resource allocation mode is the first allocation mode, the preset switching condition includes at least one of the following:
a quantity of terminal devices accessing the network device is less than a preset terminal quantity N₁;
a quantity of beams used by a terminal device that accesses the network device is less than a preset beam quantity M₁;
a downlink physical resource block utilization is less than a preset utilization R₁;
a downlink data buffer size is less than a preset buffer size L₁;
a ratio of an uplink physical resource block utilization to the downlink physical resource block utilization is greater than a preset ratio K₁; and
a quantity of terminal devices whose downlink data buffer sizes are greater than a preset buffer size L₂ is less than a preset terminal quantity N₂; and
when the second time domain resource allocation mode is the second allocation mode, the preset switching condition includes at least one of the following:
   a quantity of terminal devices accessing the network device is greater than a preset terminal quantity N₃;
   a quantity of beams used by a terminal device that accesses the network device is greater than a preset beam quantity M₂;
   a downlink physical resource block utilization is greater than a preset utilization R₂;
   a downlink data buffer size is greater than a preset buffer size L₃;
   a ratio of an uplink physical resource block utilization to the downlink physical resource block utilization is less than a preset ratio K₂; and
   a quantity of terminal devices whose downlink data buffer sizes are greater than the preset buffer size L₂ is greater than a preset terminal quantity N₄, where
   N₁≤N₃, M1≤M₂, R₁≤R₂, L₁≤L₃, K₁≤K₂, and N₂≤N₄.

In some possible implementations, the second allocation mode includes a plurality of second allocation sub-modes.

The first time domain resource allocation mode is the first allocation mode or any one of the plurality of second allocation sub-modes.

The second time domain resource allocation mode is the first allocation mode or any one of the plurality of second allocation sub-modes.

Quantities of uplink control channel resources allocated in any two of the plurality of second allocation sub-modes are different, and a quantity of uplink control channel resources allocated in any second allocation sub-mode is greater than that in the first allocation mode.

In any second allocation sub-mode in the second time domain resource allocation mode, for allocating a time domain resource to a terminal device in the second time domain resource allocation mode, the processing unit 1200 is specifically configured to:
allocate the time domain resource to the terminal device in the second allocation sub-mode.

In some possible implementations, any one of the plurality of second allocation sub-modes includes:
allocating, in the uplink slot, a plurality of sixth symbols corresponding to the second allocation sub-mode, and allocating, in the mixed slot, a seventh symbol and an eighth symbol that correspond to the second allocation sub-mode, where
each sixth symbol is for the hybrid automatic repeat request feedback, and a quantity of sixth symbols is greater than the quantity of first symbols but less than or equal to the quantity of third symbols;
the seventh symbol is for the scheduling request and/or the beam management feedback; and
the eighth symbol is for the sounding reference signal.

In some possible implementations, the plurality of second allocation sub-modes include a second allocation sub-mode A, a second allocation sub-mode B, and a second allocation sub-mode C, where quantities of uplink control channel resources allocated in the second allocation sub-mode A, the second allocation sub-mode B, and the second allocation sub-mode C increase sequentially.

In some possible implementations, when the first time domain resource allocation mode is the second allocation sub-mode A, and the second time domain resource allocation mode is the first allocation mode, the preset switching condition includes at least one of the following:
a quantity of terminal devices accessing the network device is greater than a preset terminal quantity N_{1A} but less than a preset terminal quantity N_{2A};
a quantity of beams used by a terminal device that accesses the network device is greater than a preset beam quantity M_{1A} but less than a preset beam quantity M_{2A};
a downlink physical resource block utilization is greater than a preset utilization R_{1A} but less than a preset utilization R_{2A};
a downlink data buffer size is greater than a preset buffer size L_{1A} but less than a preset buffer size L_{2A};
a ratio of an uplink physical resource block utilization to the downlink physical resource block utilization is less than a preset ratio K_{1A} but greater than a preset ratio K_{2A}; and
a quantity of terminal devices whose downlink data buffer sizes are greater than the preset buffer size L₂ is greater than a preset terminal quantity N_{3A} but less than a preset terminal quantity N_{4A}.

In some possible implementations, when the first time domain resource allocation mode is the second allocation sub-mode B, and the second time domain resource allocation mode is the first allocation mode, the preset switching condition includes at least one of the following:
a quantity of terminal devices accessing the network device is greater than a preset terminal quantity N_{1B} but less than a preset terminal quantity N_{2B};
a quantity of beams used by a terminal device that accesses the network device is greater than a preset beam quantity M_{1B} but less than a preset beam quantity M_{2B};
a downlink physical resource block utilization is greater than a preset utilization R_{1B} but less than a preset utilization R_{2B};
a downlink data buffer size is greater than a preset buffer size L_{1B} but less than a preset buffer size L_{2B};
a ratio of an uplink physical resource block utilization to the downlink physical resource block utilization is less than a preset ratio K_{1B} but greater than a preset ratio K_{2B}; and
a quantity of terminal devices whose downlink data buffer sizes are greater than the preset buffer size L₂ is greater than a preset terminal quantity N_{3B} but less than a preset terminal quantity N_{4B}.

In some possible implementations, when the first time domain resource allocation mode is the second allocation sub-mode C, and the second time domain resource allocation mode is the first allocation mode, the preset switching condition includes at least one of the following:
a quantity of terminal devices accessing the network device is greater than a preset terminal quantity N_{1C};
a quantity of beams used by a terminal device that accesses the network device is greater than a preset beam quantity M_{1C};
a downlink physical resource block utilization is greater than a preset utilization R_{1C};
a downlink data buffer size is greater than a preset buffer size L_{1C};
a ratio of an uplink physical resource block utilization to the downlink physical resource block utilization is less than a preset ratio K_{1C}; and
a quantity of terminal devices whose downlink data buffer sizes are greater than the preset buffer size L₂ is greater than a preset terminal quantity N_{2C}.
N_{1C}≥N_{2B}, N_{1B}≥N_{2A}, M_{1C}≥M_{2B}, M_{1B}≥M_{ZA}, R_{1C}≥R_{2B}, R_{1B}≥R_{2A}, L_{1C}≥L_{2B}, L_{1B}≥L_{2A}, K_{1C}≤K_{2B}, K_{1B}≤K_{2A}, N_{2C}≥N_{4B}, and N_{3B}≥N_{4A}.

In some possible implementations, when the first time domain resource allocation mode is any one of the second allocation sub-mode A, the second allocation sub-mode B, and the second allocation sub-mode C, and the first time domain resource allocation mode is the first allocation mode, the preset switching condition includes at least one of the following:
a quantity of terminal devices accessing the network device is less than a preset terminal quantity N₅;
a quantity of beams used by a terminal device that accesses the network device is less than a preset beam quantity M₃;
a downlink physical resource block utilization is less than a preset utilization R₃;
a downlink data buffer size is less than a preset buffer size L₄;
a ratio of an uplink physical resource block utilization to the downlink physical resource block utilization is greater than a preset ratio K₃; and
a quantity of terminal devices whose downlink data buffer sizes are greater than the preset buffer size L₂ is less than a preset terminal quantity N₆.

In some possible implementations, for switching from the first time domain resource allocation mode to the second time domain resource allocation mode, the processing unit 1200 is specifically configured to:
separately reconfigure, based on the second time domain resource allocation mode, a scheduling request resource, a beam management resource, and a hybrid automatic repeat request resource to time domain locations of corresponding symbols; and
reconfigure, based on the second time domain resource allocation mode, a sounding reference signal resource to a time domain location of a corresponding symbol, or limit, based on the second time domain resource allocation mode, a time domain location corresponding to a sounding reference signal resource.

FIG. 13 is a schematic diagram of a structure of a network device according to an embodiment of this application. The network device 1300 includes a memory 1301, a processor 1302, and a transceiver 1303. The memory 1301, the processor 1302, and the transceiver 1303 are connected through a bus 1304. The memory 1301 is configured to store related instructions and data, and may transmit the stored data to the processor 1302.

The processor 1302 is configured to read the related instructions in the memory 1301 to perform the following operations:
obtaining a first time domain resource allocation mode at a current moment;
switching from the first time domain resource allocation mode to a second time domain resource allocation mode when a preset switching condition corresponding to switching from the first time domain resource allocation mode to the second time domain resource allocation mode is met; and
allocating a time domain resource to a terminal device in the second time domain resource allocation mode.

In some possible implementations, the processor 1302 is further configured to perform the following operations:
controlling the transceiver 1303 to perform uplink communication and downlink communication with the terminal device via the allocated time domain resource.

In some possible implementations, the time domain resource includes a physical uplink control channel resource and/or a sounding reference signal resource.

In some possible implementations, the first time domain resource allocation mode is a first allocation mode or a second allocation mode.

The second time domain resource allocation mode is the first allocation mode or the second allocation mode.

The first time domain resource allocation mode and the second time domain resource allocation mode are different time domain resource allocation modes.

More uplink control channel resources are allocated in the second allocation mode than in the first allocation mode.

In some possible implementations, the first allocation mode includes allocating one or more first symbols and one or more second symbols in a mixed slot, where each first symbol is for a hybrid automatic repeat request feedback, and each second symbol is for a scheduling request, a beam management feedback, a sounding reference signal, or a hybrid automatic repeat request feedback.

The second allocation mode includes allocating a plurality of third symbols in an uplink slot, and allocating a fourth symbol and a fifth symbol in a mixed slot, where each third symbol is for a hybrid automatic repeat request feedback, a quantity of third symbols is greater than a quantity of first symbols, the fourth symbol is for a scheduling request and/or a beam management feedback, and the fifth symbol is for a sounding reference signal.

In some possible implementations, when the second time domain resource allocation mode is the first allocation mode, the preset switching condition includes at least one of the following:
a quantity of terminal devices accessing the network device is less than a preset terminal quantity N₁;
a quantity of beams used by a terminal device that accesses the network device is less than a preset beam quantity M₁;
a downlink physical resource block utilization is less than a preset utilization R₁;
a downlink data buffer size is less than a preset buffer size L₁;
a ratio of an uplink physical resource block utilization to the downlink physical resource block utilization is greater than a preset ratio K₁; and
a quantity of terminal devices whose downlink data buffer sizes are greater than a preset buffer size L₂ is less than a preset terminal quantity N₂; and
when the second time domain resource allocation mode is the second allocation mode, the preset switching condition includes at least one of the following:
   a quantity of terminal devices accessing the network device is greater than a preset terminal quantity N₃;
   a quantity of beams used by a terminal device that accesses the network device is greater than a preset beam quantity M₂;
   a downlink physical resource block utilization is greater than a preset utilization R₂;
   a downlink data buffer size is greater than a preset buffer size L₃;
   a ratio of an uplink physical resource block utilization to the downlink physical resource block utilization is less than a preset ratio K₂; and
   a quantity of terminal devices whose downlink data buffer sizes are greater than the preset buffer size L₂ is greater than a preset terminal quantity N₄, where
   N₁≤N₃, M1≤M₂, R₁≤R₂, L₁≤L₃, K₁≤K₂, and N₂≤N₄.

In some possible implementations, the second allocation mode includes a plurality of second allocation sub-modes.

The first time domain resource allocation mode is the first allocation mode or any one of the plurality of second allocation sub-modes.

The second time domain resource allocation mode is the first allocation mode or any one of the plurality of second allocation sub-modes.

Quantities of uplink control channel resources allocated in any two of the plurality of second allocation sub-modes are different, and a quantity of uplink control channel resources allocated in any second allocation sub-mode is greater than that in the first allocation mode.

In any second allocation sub-mode in the second time domain resource allocation mode, for allocating a time domain resource to a terminal device in the second time domain resource allocation mode, the processor 1302 is specifically configured to:
allocate the time domain resource to the terminal device in the second allocation sub-mode.

In some possible implementations, any one of the plurality of second allocation sub-modes includes:
allocating, in the uplink slot, a plurality of sixth symbols corresponding to the second allocation sub-mode, and allocating, in the mixed slot, a seventh symbol and an eighth symbol that correspond to the second allocation sub-mode, where
each sixth symbol is for the hybrid automatic repeat request feedback, and a quantity of sixth symbols is greater than the quantity of first symbols but less than or equal to the quantity of third symbols;
the seventh symbol is for the scheduling request and/or the beam management feedback; and
the eighth symbol is for the sounding reference signal.

In some possible implementations, the plurality of second allocation sub-modes include a second allocation sub-mode A, a second allocation sub-mode B, and a second allocation sub-mode C, where quantities of uplink control channel resources allocated in the second allocation sub-mode A, the second allocation sub-mode B, and the second allocation sub-mode C increase sequentially.

In some possible implementations, when the first time domain resource allocation mode is the second allocation sub-mode A, and the second time domain resource allocation mode is the first allocation mode, the preset switching condition includes at least one of the following:
a quantity of terminal devices accessing the network device is greater than a preset terminal quantity N_{1A} but less than a preset terminal quantity N_{2A};
a quantity of beams used by a terminal device that accesses the network device is greater than a preset beam quantity M_{1A} but less than a preset beam quantity M_{2A};
a downlink physical resource block utilization is greater than a preset utilization R_{1A} but less than a preset utilization R_{2A};
a downlink data buffer size is greater than a preset buffer size L_{1A} but less than a preset buffer size L_{2A};
a ratio of an uplink physical resource block utilization to the downlink physical resource block utilization is less than a preset ratio K_{1A} but greater than a preset ratio K_{2A}; and
a quantity of terminal devices whose downlink data buffer sizes are greater than the preset buffer size L₂ is greater than a preset terminal quantity N_{3A} but less than a preset terminal quantity N_{4A}.

In some possible implementations, when the first time domain resource allocation mode is the second allocation sub-mode B, and the second time domain resource allocation mode is the first allocation mode, the preset switching condition includes at least one of the following:
a quantity of terminal devices accessing the network device is greater than a preset terminal quantity N_{1B} but less than a preset terminal quantity N_{2B};
a quantity of beams used by a terminal device that accesses the network device is greater than a preset beam quantity M_{1B} but less than a preset beam quantity M_{2B};
a downlink physical resource block utilization is greater than a preset utilization R_{1B} but less than a preset utilization R_{2B};
a downlink data buffer size is greater than a preset buffer size L_{1B} but less than a preset buffer size L_{2B};
a ratio of an uplink physical resource block utilization to the downlink physical resource block utilization is less than a preset ratio K_{1B} but greater than a preset ratio K_{2B}; and
a quantity of terminal devices whose downlink data buffer sizes are greater than the preset buffer size L₂ is greater than a preset terminal quantity N_{3B} but less than a preset terminal quantity N_{4B}.

In some possible implementations, when the first time domain resource allocation mode is the second allocation sub-mode C, and the second time domain resource allocation mode is the first allocation mode, the preset switching condition includes at least one of the following:
a quantity of terminal devices accessing the network device is greater than a preset terminal quantity N_{1C};
a quantity of beams used by a terminal device that accesses the network device is greater than a preset beam quantity M_{1C};
a downlink physical resource block utilization is greater than a preset utilization R_{1C};
a downlink data buffer size is greater than a preset buffer size L_{1C};
a ratio of an uplink physical resource block utilization to the downlink physical resource block utilization is less than a preset ratio K_{1C}; and
a quantity of terminal devices whose downlink data buffer sizes are greater than the preset buffer size L₂ is greater than a preset terminal quantity N_{2C}.
N_{1C}≥N_{2B}, N_{1B}≥N_{2A}, M_{1C}≥M_{2B}, M_{1B}≥M_{ZA}, R_{1C}≥R_{2B}, R_{1B}≥R_{2A}, L_{1C}≥L_{2B}, L_{1B}≥L_{2A}, K_{1C}≤K_{2B}, K_{1B}≤K_{2A}, N_{2C}≥N_{4B}, and N_{3B}≥N_{4A}.

In some possible implementations, when the first time domain resource allocation mode is any one of the second allocation sub-mode A, the second allocation sub-mode B, and the second allocation sub-mode C, and the first time domain resource allocation mode is the first allocation mode, the preset switching condition includes at least one of the following:
a quantity of terminal devices accessing the network device is less than a preset terminal quantity N₅;
a quantity of beams used by a terminal device that accesses the network device is less than a preset beam quantity M₃;
a downlink physical resource block utilization is less than a preset utilization R₃;
a downlink data buffer size is less than a preset buffer size L₄;
a ratio of an uplink physical resource block utilization to the downlink physical resource block utilization is greater than a preset ratio K₃; and
a quantity of terminal devices whose downlink data buffer sizes are greater than the preset buffer size L₂ is less than a preset terminal quantity N₆.

In some possible implementations, for switching from the first time domain resource allocation mode to the second time domain resource allocation mode, the processor 1302 is specifically configured to:
separately reconfigure, based on the second time domain resource allocation mode, a scheduling request resource, a beam management resource, and a hybrid automatic repeat request resource to time domain locations of corresponding symbols; and
reconfigure, based on the second time domain resource allocation mode, a sounding reference signal resource to a time domain location of a corresponding symbol, or limit, based on the second time domain resource allocation mode, a time domain location corresponding to a sounding reference signal resource.

In other words, the processor 1302 may be the processing unit 1201 of the network device 1200 in the embodiment shown in FIG. 12, and the transceiver 1303 may be the transceiver unit 1202 of the network device 1200 in the embodiment shown in FIG. 12.

In some possible implementations, when the network device is a chip, the transceiver unit 1202 may be an input interface and/or an output interface, a pin, a circuit, or the like. The processing unit 1201 may execute computer-executable instructions stored in a storage unit, so that a chip in the network device performs the method in the embodiment in FIG. 4. Optionally, the storage unit is a storage unit in the chip, for example, a register or a buffer. Alternatively, the storage unit may be a storage unit that is in the terminal but is outside the chip, for example, a read-only memory (Read Only Memory, ROM), another type of static storage device that can store static information and instructions, or a random access memory (Random Access Memory, RAM).

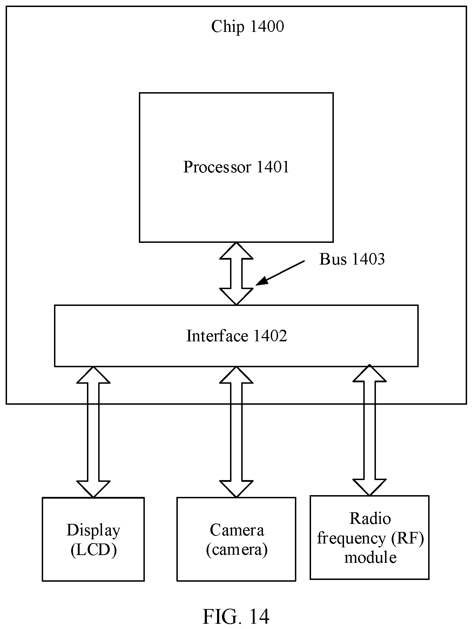

FIG. 14 is a schematic diagram of a structure of a chip according to an embodiment of this application. The chip 1400 includes a processor 1401 and one or more interfaces 1402 coupled to the processor 1401.

For example, the processor 1401 may be configured to read and execute computer-readable instructions. In a specific implementation, the processor 1401 may mainly include a controller, an arithmetic unit, and a register. For example, the controller is mainly responsible for decoding instructions and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. In a specific implementation, a hardware architecture of the processor 1401 may be an application-specific integrated circuit (application specific integrated circuit, ASIC) architecture, a microprocessor without interlocked piped stages architecture (microprocessor without interlocked piped stages architecture, MIPS), an advanced reduced instruction set computing machine (advanced RISC machine, ARM) architecture, an NP architecture, or the like. The processor 1401 may be a single-core or multi-core processor.

For example, the interface 1402 may be configured to input to-be-processed data to the processor 1401, and may output a processing result of the processor 1401. In a specific implementation, the interface 1402 may be a general-purpose input/output (general-purpose input/output, GPIO) interface, and may be connected to a plurality of peripheral devices (for example, a display (LCD), a camera (camera), and a radio frequency (radio frequency, RF) module). The interface 1402 is connected to the processor 1401 through a bus 1403.

In some possible implementations, the processor 1401 may be configured to invoke, from a memory, one or more signal sending and receiving methods provided in one or more embodiments of this application, so that the chip can implement the time domain resource allocation method in FIG. 4. The memory may be integrated into the processor 1401, or may be coupled to the chip 1400 through the interface 1402. In other words, the memory may be a part of the chip 1400, or may be independent of the chip 1400. The interface 1402 may be configured to output an execution result of the processor 1401. For example, in this application, the interface 1402 may be specifically configured to output a modulation order determined by the processor 1401. For the one or more signal sending and receiving methods provided in one or more embodiments of this application, refer to the foregoing embodiments. Details are not described herein again.

It should be noted that functions respectively corresponding to the processor 1401 and the interface 1402 may be implemented by using a hardware design, a software design, or a combination of software and hardware. This is not limited herein.

An embodiment of this application further provides a computer-readable storage medium. The computer-readable storage medium stores a computer program. When the program is executed by a processor, a procedure related to the terminal device in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a computer program product. When the computer program product is run on a computer or a processor, the computer or the processor is enabled to perform one or more steps in any one of the foregoing communication methods. When the foregoing modules in the device are implemented in a form of a software functional unit and sold or used as an independent product, the modules may be stored in the computer-readable storage medium.

It should be understood that, the processor mentioned in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) is integrated into the processor.

It should be noted that the memory described in this specification aims to include but is not limited to these memories and any memory of another proper type.

It should be further understood that "first", "second", "third", "fourth", and various numbers in this specification are merely used for differentiation for ease of description, and are not intended to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A time domain resource allocation method, applied to a network device, and comprising:
obtaining a first time domain resource allocation mode at a current moment;
switching from the first time domain resource allocation mode to a second time domain resource allocation mode when a preset switching condition corresponding to switching from the first time domain resource allocation mode to the second time domain resource allocation mode is met; and
allocating a time domain resource to a terminal device in the second time domain resource allocation mode.

2. The method according to claim 1, wherein
the time domain resource comprises a physical uplink control channel resource and/or a sounding reference signal resource.

3. The method according to claim 1 or 2, wherein
the first time domain resource allocation mode is a first allocation mode or a second allocation mode;
the second time domain resource allocation mode is the first allocation mode or the second allocation mode;
the first time domain resource allocation mode and the second time domain resource allocation mode are different time domain resource allocation modes; and
more uplink control channel resources are allocated in the second allocation mode than in the first allocation mode.

4. The method according to claim 3, wherein
the first allocation mode comprises allocating one or more first symbols and one or more second symbols in a mixed slot, wherein each first symbol is for a hybrid automatic repeat request feedback, and each second symbol is for a scheduling request, a beam management feedback, a sounding reference signal, or a hybrid automatic repeat request feedback; and
the second allocation mode comprises allocating a plurality of third symbols in an uplink slot, and allocating a fourth symbol and a fifth symbol in a mixed slot, wherein each third symbol is for a hybrid automatic repeat request feedback, a quantity of third symbols is greater than a quantity of first symbols, the fourth symbol is for a scheduling request and/or a beam management feedback, and the fifth symbol is for a sounding reference signal.

5. The method according to claim 3 or 4, wherein
when the second time domain resource allocation mode is the first allocation mode, the preset switching condition comprises at least one of the following:
a quantity of terminal devices accessing the network device is less than a preset terminal quantity N₁;
a quantity of beams used by a terminal device that accesses the network device is less than a preset beam quantity M₁;
a downlink physical resource block utilization is less than a preset utilization R₁;
a downlink data buffer size is less than a preset buffer size L₁;
a ratio of an uplink physical resource block utilization to the downlink physical resource block utilization is greater than a preset ratio K₁; and
a quantity of terminal devices whose downlink data buffer sizes are greater than a preset buffer size L₂ is less than a preset terminal quantity N₂; and
when the second time domain resource allocation mode is the second allocation mode, the preset switching condition comprises at least one of the following:
a quantity of terminal devices accessing the network device is greater than a preset terminal quantity N₃;
a quantity of beams used by a terminal device that accesses the network device is greater than a preset beam quantity M₂;
a downlink physical resource block utilization is greater than a preset utilization R₂;
a downlink data buffer size is greater than a preset buffer size L₃;
a ratio of an uplink physical resource block utilization to the downlink physical resource block utilization is less than a preset ratio K₂; and
a quantity of terminal devices whose downlink data buffer sizes are greater than the preset buffer size L₂ is greater than a preset terminal quantity N₄, wherein
N₁≤N₃, M1≤M₂, R₁≤R₂, L₁≤L₃, K₁≤K₂, and N₂≤N₄.

6. The method according to any one of claims 2 to 5, wherein
the second allocation mode comprises a plurality of second allocation sub-modes;
the first time domain resource allocation mode is the first allocation mode or any one of the plurality of second allocation sub-modes; and
the second time domain resource allocation mode is the first allocation mode or any one of the plurality of second allocation sub-modes, wherein
quantities of uplink control channel resources allocated in any two of the plurality of second allocation sub-modes are different, and a quantity of uplink control channel resources allocated in any second allocation sub-mode is greater than that in the first allocation mode; and
in any second allocation sub-mode in the second time domain resource allocation mode, the allocating a time domain resource to a terminal device in the second time domain resource allocation mode comprises:
allocating the time domain resource to the terminal device in the second allocation sub-mode.

7. The method according to claim 6, wherein
any one of the plurality of second allocation sub-modes comprises:
allocating, in the uplink slot, a plurality of sixth symbols corresponding to the second allocation sub-mode, and allocating, in the mixed slot, a seventh symbol and an eighth symbol that correspond to the second allocation sub-mode, wherein
each sixth symbol is for the hybrid automatic repeat request feedback, and a quantity of sixth symbols is greater than the quantity of first symbols but less than or equal to the quantity of third symbols;
the seventh symbol is for the scheduling request and/or the beam management feedback; and
the eighth symbol is for the sounding reference signal.

8. The method according to claim 6 or 7, wherein
the plurality of second allocation sub-modes comprise a second allocation sub-mode A, a second allocation sub-mode B, and a second allocation sub-mode C, wherein quantities of uplink control channel resources allocated in the second allocation sub-mode A, the second allocation sub-mode B, and the second allocation sub-mode C increase sequentially.

9. The method according to claim 8, wherein
when the first time domain resource allocation mode is the second allocation sub-mode A, and the second time domain resource allocation mode is the first allocation mode, the preset switching condition comprises at least one of the following:
a quantity of terminal devices accessing the network device is greater than a preset terminal quantity N_{1A} but less than a preset terminal quantity N_{2A};
a quantity of beams used by a terminal device that accesses the network device is greater than a preset beam quantity M_{1A} but less than a preset beam quantity M_{2A};
a downlink physical resource block utilization is greater than a preset utilization R_{1A} but less than a preset utilization R_{2A};
a downlink data buffer size is greater than a preset buffer size L_{1A} but less than a preset buffer size L_{2A};
a ratio of an uplink physical resource block utilization to the downlink physical resource block utilization is less than a preset ratio K_{1A} but greater than a preset ratio K_{2A}; and
a quantity of terminal devices whose downlink data buffer sizes are greater than the preset buffer size L₂ is greater than a preset terminal quantity N_{3A} but less than a preset terminal quantity N_{4A}.

10. The method according to claim 9, wherein
when the first time domain resource allocation mode is the second allocation sub-mode B, and the second time domain resource allocation mode is the first allocation mode, the preset switching condition comprises at least one of the following:
a quantity of terminal devices accessing the network device is greater than a preset terminal quantity N_{1B} but less than a preset terminal quantity N_{2B};
a quantity of beams used by a terminal device that accesses the network device is greater than a preset beam quantity M_{1B} but less than a preset beam quantity M_{2B};
a downlink physical resource block utilization is greater than a preset utilization R_{1B} but less than a preset utilization R_{2B};
a downlink data buffer size is greater than a preset buffer size L_{1B} but less than a preset buffer size L_{2B};
a ratio of an uplink physical resource block utilization to the downlink physical resource block utilization is less than a preset ratio K_{1B} but greater than a preset ratio K_{2B}; and
a quantity of terminal devices whose downlink data buffer sizes are greater than the preset buffer size L₂ is greater than a preset terminal quantity N_{3B} but less than a preset terminal quantity N_{4B}.

11. The method according to claim 10, wherein
when the first time domain resource allocation mode is the second allocation sub-mode C, and the second time domain resource allocation mode is the first allocation mode, the preset switching condition comprises at least one of the following:
a quantity of terminal devices accessing the network device is greater than a preset terminal quantity N_{1C};
a quantity of beams used by a terminal device that accesses the network device is greater than a preset beam quantity M_{1C};
a downlink physical resource block utilization is greater than a preset utilization R_{1C};
a downlink data buffer size is greater than a preset buffer size L_{1C};
a ratio of an uplink physical resource block utilization to the downlink physical resource block utilization is less than a preset ratio K_{1C}; and
a quantity of terminal devices whose downlink data buffer sizes are greater than the preset buffer size L₂ is greater than a preset terminal quantity N_{2C}, wherein
N_{1C}≥N_{2B}, N_{1B}≥N_{2A}, M_{1C}≥M_{2B}, M_{1B}≥M_{2A}, R_{1C}≥R_{2B}, R_{1B}≥R_{2A}, L_{1C}≥L_{2B}, L_{1B}≥L_{2A}, K_{1C}≤K_{2B}, K_{1B}≤K_{2A},N_{2C}≥N_{4B}, and N_{3B}≥N_{4A}.

12. The method according to any one of claims 8 to 11, wherein
when the first time domain resource allocation mode is any one of the second allocation sub-mode A, the second allocation sub-mode B, and the second allocation sub-mode C, and the first time domain resource allocation mode is the first allocation mode, the preset switching condition comprises at least one of the following:
a quantity of terminal devices accessing the network device is less than a preset terminal quantity N₅;
a quantity of beams used by a terminal device that accesses the network device is less than a preset beam quantity M₃;
a downlink physical resource block utilization is less than a preset utilization R₃;
a downlink data buffer size is less than a preset buffer size L₄;
a ratio of an uplink physical resource block utilization to the downlink physical resource block utilization is greater than a preset ratio K₃; and
a quantity of terminal devices whose downlink data buffer sizes are greater than the preset buffer size L₂ is less than a preset terminal quantity N₆.

13. The method according to any one of claims 1 to 12, wherein the switching from the first time domain resource allocation mode to the second time domain resource allocation mode comprises:
separately reconfiguring, based on the second time domain resource allocation mode, a scheduling request resource, a beam management resource, and a hybrid automatic repeat request resource to time domain locations of corresponding symbols; and
reconfiguring, based on the second time domain resource allocation mode, a sounding reference signal resource to a time domain location of a corresponding symbol, or limiting, based on the second time domain resource allocation mode, a time domain location corresponding to a sounding reference signal resource.

14. A network device, comprising:
a processing unit, configured to obtain a first time domain resource allocation mode at a current moment, wherein
the processing unit is further configured to switch from the first time domain resource allocation mode to a second time domain resource allocation mode when a preset switching condition corresponding to switching from the first time domain resource allocation mode to the second time domain resource allocation mode is met; and
the processing unit is further configured to allocate a time domain resource to a terminal device in the second time domain resource allocation mode.

15. The device according to claim 14, wherein
the time domain resource comprises a physical uplink control channel resource and/or a sounding reference signal resource.

16. The device according to claim 14 or 15, wherein
the first time domain resource allocation mode is a first allocation mode or a second allocation mode;
the second time domain resource allocation mode is the first allocation mode or the second allocation mode;
the first time domain resource allocation mode and the second time domain resource allocation mode are different time domain resource allocation modes; and
more uplink control channel resources are allocated in the second allocation mode than in the first allocation mode.

17. The device according to claim 16, wherein
the first allocation mode comprises allocating one or more first symbols and one or more second symbols in a mixed slot, wherein each first symbol is for a hybrid automatic repeat request feedback, and each second symbol is for a scheduling request, a beam management feedback, a sounding reference signal, or a hybrid automatic repeat request feedback; and
the second allocation mode comprises allocating a plurality of third symbols in an uplink slot, and allocating a fourth symbol and a fifth symbol in a mixed slot, wherein each third symbol is for a hybrid automatic repeat request feedback, a quantity of third symbols is greater than a quantity of first symbols, the fourth symbol is for a scheduling request and/or a beam management feedback, and the fifth symbol is for a sounding reference signal.

18. The device according to claim 16 or 17, wherein
when the second time domain resource allocation mode is the first allocation mode, the preset switching condition comprises at least one of the following:
a quantity of terminal devices accessing the network device is less than a preset terminal quantity N₁;
a quantity of beams used by a terminal device that accesses the network device is less than a preset beam quantity M₁;
a downlink physical resource block utilization is less than a preset utilization R₁;
a downlink data buffer size is less than a preset buffer size L₁;
a ratio of an uplink physical resource block utilization to the downlink physical resource block utilization is greater than a preset ratio K₁; and
a quantity of terminal devices whose downlink data buffer sizes are greater than a preset buffer size L₂ is less than a preset terminal quantity N₂; and
when the second time domain resource allocation mode is the second allocation mode, the preset switching condition comprises at least one of the following:
a quantity of terminal devices accessing the network device is greater than a preset terminal quantity N₃;
a quantity of beams used by a terminal device that accesses the network device is greater than a preset beam quantity M₂;
a downlink physical resource block utilization is greater than a preset utilization R₂;
a downlink data buffer size is greater than a preset buffer size L₃;
a ratio of an uplink physical resource block utilization to the downlink physical resource block utilization is less than a preset ratio K₂; and
a quantity of terminal devices whose downlink data buffer sizes are greater than the preset buffer size L₂ is greater than a preset terminal quantity N₄, wherein
N₁≤N₃, M1≤M₂, R₁≤R₂, L₁≤L₃, K₁≤K₂, and N₂≤N₄.

19. The device according to any one of claims 15 to 18, wherein
the second allocation mode comprises a plurality of second allocation sub-modes;
the first time domain resource allocation mode is the first allocation mode or any one of the plurality of second allocation sub-modes; and
the second time domain resource allocation mode is the first allocation mode or any one of the plurality of second allocation sub-modes, wherein
quantities of uplink control channel resources allocated in any two of the plurality of second allocation sub-modes are different, and a quantity of uplink control channel resources allocated in any second allocation sub-mode is greater than that in the first allocation mode; and
in any second allocation sub-mode in the second time domain resource allocation mode, for allocating a time domain resource to a terminal device in the second time domain resource allocation mode, the processing unit is specifically configured to:
allocate the time domain resource to the terminal device in the second allocation sub-mode.

20. The device according to claim 19, wherein
any one of the plurality of second allocation sub-modes comprises:
allocating, in the uplink slot, a plurality of sixth symbols corresponding to the second allocation sub-mode, and allocating, in the mixed slot, a seventh symbol and an eighth symbol that correspond to the second allocation sub-mode, wherein
each sixth symbol is for the hybrid automatic repeat request feedback, and a quantity of sixth symbols is greater than the quantity of first symbols but less than or equal to the quantity of third symbols;
the seventh symbol is for the scheduling request and/or the beam management feedback; and
the eighth symbol is for the sounding reference signal.

21. The device according to claim 19 or 20, wherein
the plurality of second allocation sub-modes comprise a second allocation sub-mode A, a second allocation sub-mode B, and a second allocation sub-mode C, wherein quantities of uplink control channel resources allocated in the second allocation sub-mode A, the second allocation sub-mode B, and the second allocation sub-mode C increase sequentially.

22. The device according to claim 21, wherein
when the first time domain resource allocation mode is the second allocation sub-mode A, and the second time domain resource allocation mode is the first allocation mode, the preset switching condition comprises at least one of the following:
a quantity of terminal devices accessing the network device is greater than a preset terminal quantity N_{1A} but less than a preset terminal quantity N_{2A};
a quantity of beams used by a terminal device that accesses the network device is greater than a preset beam quantity M_{1A} but less than a preset beam quantity M_{2A};
a downlink physical resource block utilization is greater than a preset utilization R_{1A} but less than a preset utilization R_{2A};
a downlink data buffer size is greater than a preset buffer size L_{1A} but less than a preset buffer size L_{2A};
a ratio of an uplink physical resource block utilization to the downlink physical resource block utilization is less than a preset ratio K_{1A} but greater than a preset ratio K_{2A}; and
a quantity of terminal devices whose downlink data buffer sizes are greater than the preset buffer size L₂ is greater than a preset terminal quantity N_{3A} but less than a preset terminal quantity N_{4A}.

23. The device according to claim 22, wherein
when the first time domain resource allocation mode is the second allocation sub-mode B, and the second time domain resource allocation mode is the first allocation mode, the preset switching condition comprises at least one of the following:
a quantity of terminal devices accessing the network device is greater than a preset terminal quantity N_{1B} but less than a preset terminal quantity N_{2B};
a quantity of beams used by a terminal device that accesses the network device is greater than a preset beam quantity M_{1B} but less than a preset beam quantity M_{2B};
a downlink physical resource block utilization is greater than a preset utilization R_{1B} but less than a preset utilization R_{2B};
a downlink data buffer size is greater than a preset buffer size L_{1B} but less than a preset buffer size L_{2B};
a ratio of an uplink physical resource block utilization to the downlink physical resource block utilization is less than a preset ratio K_{1B} but greater than a preset ratio K_{2B}; and
a quantity of terminal devices whose downlink data buffer sizes are greater than the preset buffer size L₂ is greater than a preset terminal quantity N_{3B} but less than a preset terminal quantity N_{4B}.

24. The device according to claim 23, wherein
when the first time domain resource allocation mode is the second allocation sub-mode C, and the second time domain resource allocation mode is the first allocation mode, the preset switching condition comprises at least one of the following:
a quantity of terminal devices accessing the network device is greater than a preset terminal quantity N_{1C};
a quantity of beams used by a terminal device that accesses the network device is greater than a preset beam quantity M_{1C};
a downlink physical resource block utilization is greater than a preset utilization R_{1C};
a downlink data buffer size is greater than a preset buffer size L_{1C};
a ratio of an uplink physical resource block utilization to the downlink physical resource block utilization is less than a preset ratio K_{1C}; and
a quantity of terminal devices whose downlink data buffer sizes are greater than the preset buffer size L₂ is greater than a preset terminal quantity N_{2C}, wherein
N_{1C}≥N_{2B}, N_{1B}≥N_{2A}, M_{1C}≥M_{2B}, M_{1B}≥M_{2A}, R_{1C}≥R_{2B}, R_{1B}≥R_{2A}, L_{1C}≥L_{2B}, L_{1B}≥L_{2A}, K_{1C}≤K_{2B}, K_{1B}≤K_{2A}, N_{2C}≥N_{4B}, and N_{3B}≥N_{4A}.

25. The device according to any one of claims 21 to 24, wherein
when the first time domain resource allocation mode is any one of the second allocation sub-mode A, the second allocation sub-mode B, and the second allocation sub-mode C, and the first time domain resource allocation mode is the first allocation mode, the preset switching condition comprises at least one of the following:
a quantity of terminal devices accessing the network device is less than a preset terminal quantity N₅;
a quantity of beams used by a terminal device that accesses the network device is less than a preset beam quantity M₃;
a downlink physical resource block utilization is less than a preset utilization R₃;
a downlink data buffer size is less than a preset buffer size L₄;
a ratio of an uplink physical resource block utilization to the downlink physical resource block utilization is greater than a preset ratio K₃; and
a quantity of terminal devices whose downlink data buffer sizes are greater than the preset buffer size L₂ is less than a preset terminal quantity N₆.

26. The device according to any one of claims 14 to 25, wherein
for switching from the first time domain resource allocation mode to the second time domain resource allocation mode, the processing unit is specifically configured to:
separately reconfigure, based on the second time domain resource allocation mode, a scheduling request resource, a beam management resource, and a hybrid automatic repeat request resource to time domain locations of corresponding symbols; and
reconfigure, based on the second time domain resource allocation mode, a sounding reference signal resource to a time domain location of a corresponding symbol, or limit, based on the second time domain resource allocation mode, a time domain location corresponding to a sounding reference signal resource.

27. A network device, comprising a processor, wherein the processor is connected to a memory, the memory is configured to store a computer program, and the processor is configured to execute the computer program stored in the memory, to enable the apparatus to perform the method according to any one of claims 1 to 13.

28. A computer-readable storage medium, wherein the computer-readable storage medium stores a computer program, and when the computer program is run, the method according to any one of claims 1 to 13 is implemented.

29. A computer program product, wherein the computer program product comprises computer program code, and when the computer program code is run, the method according to any one of claims 1 to 13 is implemented.

30. A chip system, wherein the chip system comprises a processor, and the processor is configured to implement the method according to any one of claims 1 to 13.
